(19)

Europäisches
Patentamt
European
Patent Office
Office européen
des brevets

(11) **EP 3 093 760 A1**

(12) **EUROPEAN PATENT APPLICATION**

(43) Date of publication:
**16.11.2016  Bulletin 2016/46**

(51) Int Cl.:
***G06F 9/50*** (2006.01)

(21) Application number: **16165525.3**

(22) Date of filing: **15.04.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **01.05.2015  JP 2015093952**

(71) Applicant: **FUJITSU LIMITED
Kawasaki-shi,
Kanagawa 211-8588 (JP)**

(72) Inventors:
- **Uchiumi, Tetsuya
  Kanagawa, 211-8588 (JP)**
- **Kikuchi, Shinji
  Kanagawa, 211-8588 (JP)**
- **Kitajima, Shinya
  Kanagawa, 211-8588 (JP)**
- **Uchikawa, Tomoki
  Kanagawa, 211-8588 (JP)**
- **Ito, Kazuhiko
  Kanagawa, 211-8588 (JP)**

(74) Representative: **Hoffmann Eitle
Patent- und Rechtsanwälte PartmbB
Arabellastraße 30
81925 München (DE)**

(54) **DEVICE AND METHOD**

(57)    A method for outputting a usage history of a system that includes resources having virtual machines, storage devices, networks, and a backup device, and that includes a storage device storing first usage history information, the method includes designating a usage combination of the resources, specifying clients who use the resources of the system in a combination similar to the usage combination within a range of a threshold, extracting the first usage history information corresponding to each of the clients from the storage device, categorizing one or more clients, among the clients, having similar time-series changes in the first usage history information into an identical group based on a similarity between the time-series changes in the first usage history information of the clients, and outputting second usage history information indicating a time-series change of the first usage history information.

## FIG. 1

**Description**

FIELD

The embodiments discussed herein are related to a device and a method.

BACKGROUND

Various cloud services (hereinafter simply referred to as clouds) are currently provided by a large number of service providers. A cloud simultaneously provides one or more services to a user. The user uses a combination of services provided by clouds, thereby establishing a desired system. To newly establish a system by using clouds, the user often selects which clouds to use from among clouds provided by multiple providers.

Examples of cloud selection methods include a method of selecting an appropriate cloud by referring to the costs for use of clouds provided by the respective providers. However, the costs referred to by the user in this method are for an initial cost, and this method does not take into account a monthly cost that varies with the usage of the cloud.

Another selection method is to allow a user to select an appropriate cloud based on the usage history of another user having a similar usage configuration of services. In this method, a user predicts the usage of a cloud by referring to the usage history of another user having a similar usage configuration. Estimating a future cost based on this predicted usage, the user selects an appropriate cloud.

Examples of the technique of providing information include the following first to third techniques.

A device according to the first technique divides time-series data of item operations into multiple item operation sets, and generates an abstract item operation set based on a similarity between item operation sets. Then, the device according to the first technique extracts a frequent sequential pattern from the sequences of the abstract item operation sets, and recommends an item and an operation of the item to the user using the frequent sequential pattern.

A device according to the second technique includes a collection unit, a publication level setting unit, and a providing control unit. The collection unit collects log data of multiple users from multiple services. The publication level setting unit sets the publication level of each user for the collected log openness to the services. The providing control unit controls provision of the collected log data to the multiple services based on the set publication level.

A device according to the third technique categorizes, into multiple groups, log data that includes monitoring data at a monitoring target system as a management target. Then, the device according to the third technique calculates a regression model again by synthesizing the regression models generated for the respective groups by use of the log data belonging to the groups corresponding to the regression model, and examination target log data that is log data as a target of performance examination.

These techniques are disclosed in, for example, Japanese Patent Laid-open Patent Publication No. 2013-143039, Japanese Patent Laid-open Patent Publication No. 2014-29587, and International Publication Pamphlet No. WO2012/086444.

SUMMARY

TECHNICAL PROBLEM

A certain user does not typically use services in a way similar to that of another user, if any, whose usage configuration is even similar to that of the certain user. This may often have the result that usage predicted based on the usage history of a particular user having the similar usage configuration deviates from the usage actually made. Moreover, if there are several other users who have usage configurations similar to that of a certain user but offer usage histories different from each other, it is difficult for the certain user to determine which usage history to use to predict usage.

Therefore, according to one aspect, an object of the present disclosure is to enable a user to easily know usage patterns of similar services.

SOLUTION TO PROBLEM

According to an aspect of the invention, a method for outputting a usage history of a system that includes resources having a plurality of virtual machines, a plurality of information storage devices, a plurality of networks, and a backup device, and that includes a storage device storing first usage history information indicating usage of the resources for each client, the method includes designating a usage combination of the resources that include the plurality of virtual machines, the plurality of information storage devices, the plurality of networks, and the backup device, specifying clients who use the resources of the system in a combination similar to the usage combination within a range of a predetermined threshold, extracting the first usage history information corresponding to each of the clients from the storage device, categorizing one or more clients, among the clients, having similar time-series changes in the first usage history information into an identical group based on a similarity between the time-series changes in the first usage history information of the clients, and outputting, as the usage history, second usage history information indicating a time-series change of the first usage history information of the one or more clients categorized in the identical group respectively.

ADVANTAGEOUS EFFECTS OF INVENTION

According to the aspect, it is possible to enable a user to easily know usage patterns of similar services.

Specifically, by specifying a combination of resources, a user who is about to use resources newly may know, for each usage history pattern, a time-series usage history of another client having a combination of resources similar to the specified combination, and thereby to determine a user's own usage form by referring to the usage history patterns. In addition, this allows resource providers to know demand for resource enhancement.

BRIEF DESCRIPTION OF DRAWINGS

FIG. 1 illustrates an exemplary usage of an information providing service according to an embodiment of the present disclosure;

FIG. 2 is an exemplary functional block diagram of an information providing device according to the embodiment;

FIG. 3 illustrates an exemplary configuration of an information providing system according to Embodiment 1 of the present disclosure;

FIG. 4 illustrates an example of service set usage information;

FIG. 5 illustrates the service set usage information after abstraction;

FIG. 6 illustrates an exemplary configuration of configuration cluster information;

FIG. 7A illustrates an exemplary correlation matrix;

FIG. 7B illustrates an exemplary correlation matrix;

FIG. 8 is an explanatory diagram of a configuration cluster and a use amount cluster formed for each service type;

FIG. 9 illustrates an exemplary configuration of use amount cluster information;

FIG. 10 illustrates exemplary price information;

FIG. 11 illustrates an exemplary configuration of pattern information;

FIG. 12 is an explanatory diagram of search;

FIG. 13 is an explanatory diagram of a second format of outputting each price pattern of an influential type service to which averaged patterns of other services are added;

FIG. 14 is an exemplary detailed flowchart of the process of a learning stage;

FIG. 15 is an exemplary detailed flowchart of the process of configuration clustering;

FIG. 16 is an exemplary detailed flowchart of the process of usage history clustering;

FIG. 17 is an exemplary detailed flowchart of the process of a providing stage;

FIG. 18 illustrates an exemplary hardware configuration of the information providing device according to Embodiment 1;

FIG. 19 illustrates an exemplary correlation matrix for all services;

FIG. 20 is an explanatory diagram of search according to Embodiment 2 of the present disclosure; and

FIG. 21 is an exemplary flowchart of processing by an information providing system according to Embodiment 3 of the present disclosure.

DESCRIPTION OF EMBODIMENTS

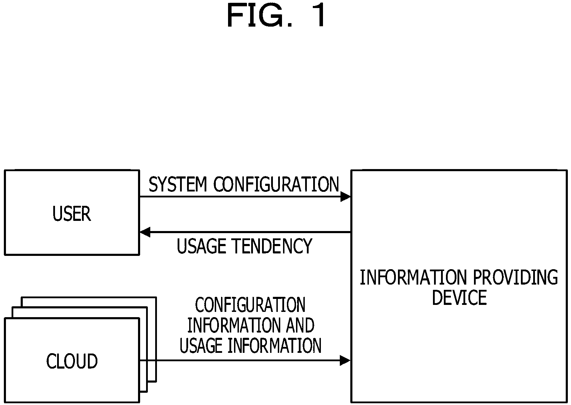

FIG. 1 illustrates an exemplary usage of an information providing service according to an Embodiment of the present disclosure. In FIG. 1, when using a cloud, a user selects a combination of one or more services to be simultaneously used from among various services provided by the cloud. The user uses the information providing service to know the usage fee of the cloud that would be resulted from using the selected combination of services. To use this information providing service, the user inputs a combination of services that the user wants to simultaneously use to an information providing device. As a response to the input, the user may acquire a usage tendency of a user who used, in the past, a combination of services similar to the combination of services that the user wants to use. Specifically, the usage tendency is a pattern of a time-series change in a usage of services. The user may acquire one or multiple such usage tendencies. By referring to the acquired usage tendencies, the user may predict the usage of services that the user wants to use. Based on this predicted usage, the user may know change of the usage fee that would cost in using the cloud.

The information providing service previously acquires information on service usage by the user from one or more clouds and stores this information. The information includes information on the types of services simultaneously used by the user, and information on time-series changes in usages of these services. Having received inputting of a combination of services that the user wants to use, the information providing service uses these pieces of information to generate and output the pattern of the usage tendency of a combination similar to the combination.

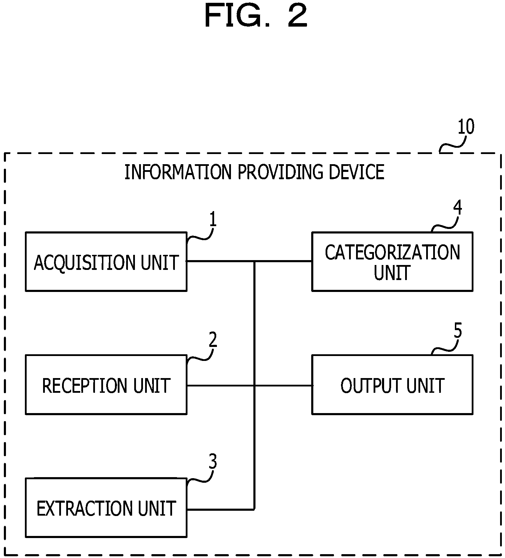

FIG. 2 is an exemplary functional block diagram of the information providing device according to the embodiment. In FIG. 2, this information providing device 10 includes an acquisition unit 1, a reception unit 2, an extraction unit 3, a categorization unit 4, and an output unit 5.

The acquisition unit 1 acquires, from a system that provides services, usage history information including a service type used by the user and a resource usage of the service type, and price information on the use of the service type. The reception unit 2 receives information on one or more service types to be used at the target system. The extraction unit 3 extracts, from the acquired usage history information, the usage history information of a user who used a combination similar to the received combination of the one or more service types. The categorization unit 4 categorizes resource time-series change information generated from resource usages of users included in the extracted usage history information into one or more patterns based on the similarity of this time-series change information. The output unit 5 outputs a price time-series change of each categorized pattern by referring to the price information.

Specifically, a system that provides services is, for example, a system that provides cloud services. Specifically, a combination of service types is, for example, a combination (service set) of service types simultaneously used by a user.

With this configuration described above, the price time-series change of each categorized pattern is output. In other words, the information providing device 10 may present a user with the usage tendency (pattern) of any other user having a similar usage configuration. This allows the user to easily know information on a similar service type in a different usage. By referring to the price time-series change of each pattern, the user may have an improved accuracy of prediction of a use amount that would cost to the system.

The time-series change information indicates the time-series change of the use amount of a resource. The similarity of the time-series change information is a similarity based on the correlation of the time-series change information between users included in the extracted usage history information.

With this configuration described above, pieces of the time-series change information having a strong correlation therebetween may be categorized into an identical pattern.

The extraction by the extraction unit 3 includes extraction of, for each service type, the usage history information of one or more users who used similar combinations. The categorization by the categorization unit 4 includes categorization of the time-series change information into one or more patterns for each service type. The outputting by the output unit 5 includes outputting of, for each service type, the price time-series change of each categorized pattern based on the correlation by referring to the price information.

With this configuration described above, the time-series change information may be categorized for each service type.

The outputting by the output unit 5 includes outputting of the ratio of the number of pieces of the time-series change information categorized into each pattern relative to the number of users included in the extracted usage history information.

This configuration described above allows a user to know the ratio of the number of pieces of the time-series change information categorized into each pattern relative to the number of users included in the extracted usage history information.

The acquisition by the acquisition unit 1 includes acquisition of the usage history information and the price information from one or more systems that provides services. The extraction by the extraction unit 3 includes extraction of, for each system that provides a similar combination, the usage history information of a user who used a combination similar to a received combination of service types. The categorization by the categorization unit 4 includes categorization of, for each system that provides a similar combination, the time-series change information into one or more patterns based on the correlation. The outputting by the output unit 5 includes outputting of, for each system that provides a similar combination, the price time-series change of each categorized pattern by referring to the price information.

This configuration described above allows a user to know the price time-series change of each categorized pattern for each system that provides a similar combination.

(Embodiment 1)

Hereinafter, a combination of services simultaneously used by a user is referred to as a service set. The configuration of a service set includes a combination of services and the number of uses of each service. A component of the service set is a service included in the combination. For example, a cloud provides virtual machine services, storage services, network services, and backup services, and a user simultaneously uses two virtual machine services, one storage service, and one network service among them. In this example, the configuration of the service set used by the user includes a combination of the virtual machine service × 2, the storage service, and the network service, and the number of the services used. The components of the service set are the virtual machine service × 2, the storage service, and the network service. The two virtual machine services may be individually treated.

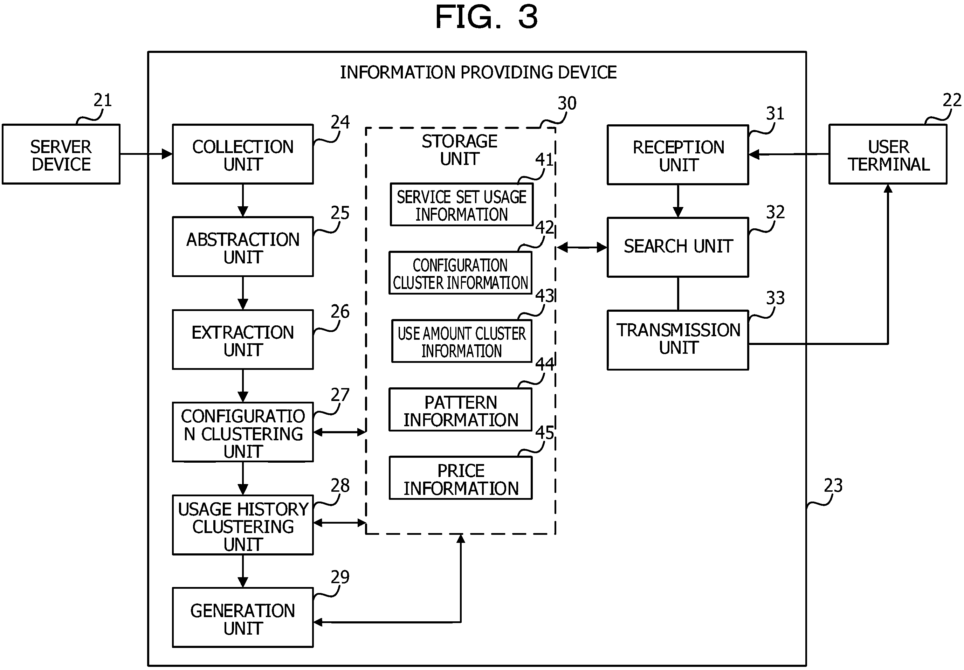

FIG. 3 illustrates an exemplary configuration of an information providing system according to Embodiment 1 of the present disclosure. In FIG. 3, this information providing system includes one or more server devices 21, a user terminal 22, and an information providing device 23. Each server device 21 and the user terminal 22 are connected with the information providing device 23 through a communication network such as the Internet.

The server device 21 is an information processing device of a service provider that provides a service such as a cloud.

The user terminal 22 is a terminal device capable of using a service provided by the information providing device 23.

The information providing device 23 provides the information providing service described above. Processing related to the information providing service has two stages of a learning stage and a providing stage. The learning stage involves processing of generating the pattern (usage tendency) of the service usage of each service set having a similar configuration based on a past service usage by a user. The providing stage involves processing of providing the user with the pattern generated at the learning stage in response to a request from the user. The information providing device 23 includes a collection unit 24, an abstraction unit 25, an extraction unit 26, a configuration clustering unit 27, a usage history clustering unit 28, a generation unit 29, and a storage unit 30, which are involved in the processing at the learning stage. The information providing device 23 includes the storage unit 30, a reception unit 31, a search unit 32, and a transmission unit 33, which are involved in the processing at the providing stage.

The information providing device 23 is an example of the information providing device 10. The collection unit 24 is an example of the acquisition unit 1. The reception unit 31 is an example of the reception unit 2. The configuration clustering unit 27 and the search unit 32 provides part or all of the functionality of the extraction unit 3. The usage history clustering unit 28 and the search unit 32 provide part or all of the functionality of the categorization unit 4. The search unit 32 is an example of the output unit 5.

(Learning Stage)

The following describes the processing at the learning stage.

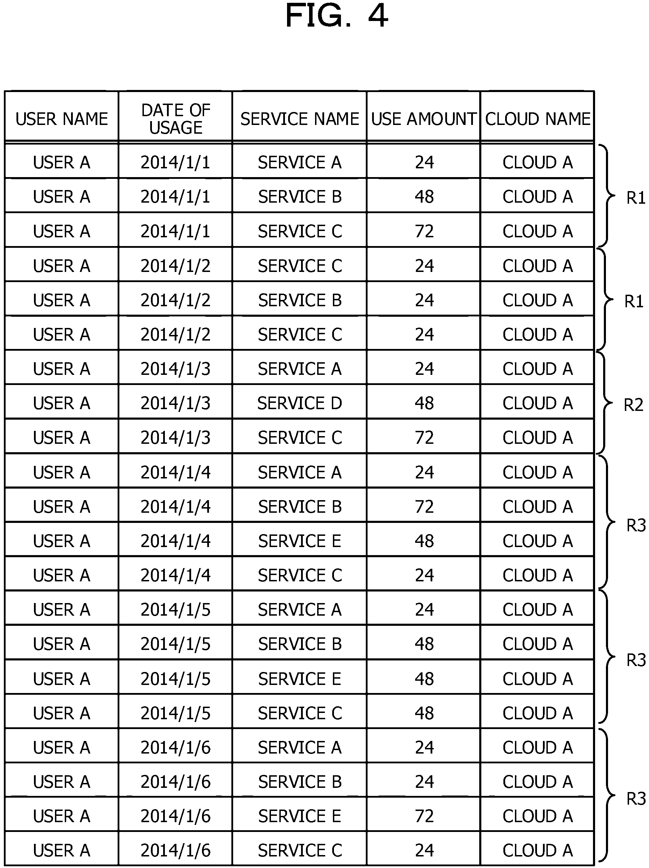

The collection unit 24 collects, from the one or more server devices 21, information on (hereinafter referred to as service set usage information 41) the usage of a service set by a user who used a cloud in the past, and price information 45. The service set usage information 41 includes identification information of the user, identification information of the cloud, configuration information, and usage information. The identification information of the user uniquely specifies the user. The identification information of the cloud identifies the cloud that provides the service set used by the user. The configuration information indicates the configuration of the service set used by the user. Since the configuration of the service set may be changed through specification by the user, the configuration information includes information indicating the configuration of the service set in a predetermined duration, and a use duration of each configuration. The usage information indicates the time-series change of the usage of each component of the service set. Specifically, the usage information indicates the time-series change of the use amount of each component of the service set. Specifically, a component of the service set is a service. The service set usage information 41 will be described in detail later with reference to FIG. 4. The price information 45 indicates the price of using each service in a predetermined usage. The collection unit 24 stores the service set usage information 41 and the price information 45 in the storage unit 30.

The abstraction unit 25 abstracts the configuration information. Specifically, the abstraction unit 25 abstracts each component of a service set indicated by the configuration information based on a type or predetermined attribute of the component (service). The configuration information collected by the collection unit 24 is labeled with the name (identification information) of an individual service (resource) of each cloud. The abstraction unit 25 specifies the type of a service indicated by an individual service name (resource name). Then, the abstraction unit 25 categorizes the resource names based on the type of the service. As a result of this categorization, the abstraction unit 25 replaces the resource name of the configuration information with the type name of the service. This allows any component of the configuration information to be shared among multiple clouds. The abstraction unit 25 may previously hold, in a predetermined storage region, correspondence information that associates the identification information of a resource and the identification information of the type of the resource, and may use the identification information of individual services to specify the type of a service based on this correspondence information.

The extraction unit 26 extracts a modal configuration from the configuration information. The modal configuration is the configuration of a service set used by a user for the longest duration in a predetermined duration. The modal configuration is extracted for each user.

The configuration clustering unit 27 categorizes (clusters) users based on the configuration of a service set used by each user. Specifically, the configuration clustering unit 27 clusters users into one or more groups (hereinafter referred to as configuration clusters) in accordance with the similarity between the configurations of used service sets by referring to the configuration information. Then, the configuration clustering unit 27 stores a result of this clustering in configuration cluster information 42. This allows for specification of a set of users who used service sets having similar configurations.

The usage history clustering unit 28 further clusters users in a configuration cluster based on the usage of each component of each service set. Specifically, the usage history clustering unit 28 further clusters users in each configuration cluster into one or more groups (hereinafter referred to as use amount clusters) in accordance with the correlation of the usage of each component of each service set by referring to the usage information. Then, the usage history clustering unit 28 stores a result of this clustering in use amount cluster information 43. In this manner, a set of users with similar usages may be specified from among users who used service sets having similar configurations.

The generation unit 29 generates information (hereinafter referred to as a pattern) indicating the usage tendency of a service set based on the use amount cluster information 43. Specifically, the pattern is information indicating the tendency of time-series change of a service use amount. The pattern is generated by averaging, for each use amount cluster, a value indicating the service usage of each user. The generation unit 29 generates information indicating the price time-series change for each pattern based on the generated pattern and the price information 45. Then, the generation unit 29 stores the price time-series change for each pattern in pattern information 44.

The storage unit 30 stores therein the service set usage information 41, the configuration cluster information 42, the use amount cluster information 43, the pattern information 44, and the price information 45. Each kind of information will be described in detail later.

The service set usage information 41 is an example of the usage history information. The price information 45 is an example of the price information.

(Providing Stage)

The following describes the processing at the providing stage.

The reception unit 31 receives a pattern output request from the user terminal 22. The pattern output request includes requested configuration information indicating the configuration of a service set (hereinafter referred to as a target service set) that a user wants to use. Specifically, the requested configuration information has the same data structure as that of the configuration information included in the service set usage information 41.

The search unit 32 specifies a configuration cluster having a configuration similar to a configuration indicated by the requested configuration information, and searches the pattern information 44 for the pattern corresponding to the specified configuration cluster.

The transmission unit 33 transmits information indicating the retrieved pattern to the user terminal 22.

In the following, each unit will be described in detail.

(Collection)

The collection unit 24 collects the service set usage information 41 and the price information 45 from the one or more server devices 21 and stores the information in the storage unit 30. The service set usage information 41 includes the configuration information and the usage information. FIG. 4 illustrates an example of the service set usage information 41.

In FIG. 4, the service set usage information 41 includes data items of "user name", "date of usage", "service name", "use amount", and "cloud name". These data items are associated with one another for each record (row).

"User name" is identification information for uniquely identifying a user. "Date of usage" is a date of usage on which the user used a service. "Service name" is identification information of a service used by the user. "Use amount" is the use amount of the service used by the user on the date of usage. "Cloud name" is identification information for uniquely identifying a cloud that provides the service used by the user.

A combination of the data items of "user name", "service name", and "date of usage" corresponds to the configuration information. "Service name" of each element of a record group having the same values of "user" and "date of usage" indicates the configuration of a service set.

A combination of the data items of "user name", "service name", "date of usage", and "use amount" corresponds to the usage information.

"Date of usage" is in the unit of day, but may be in the unit of a predetermined time.

(Abstraction)

The abstraction unit 25 abstracts each component of a service set indicated by the configuration information based on the type or predetermined attribute of the component (service).

The following describes an example in which the configuration information on a user A of a cloud C1 includes services with service names (resource names) of A, B, and C. The types of the service names A, B, and C are "Virtual Machine", "Storage", and "Network", respectively. In this case, the abstraction unit 25 replaces the service names A, B, and C in the configuration information of the user A with "Virtual Machine", "Storage", and "Network", respectively.

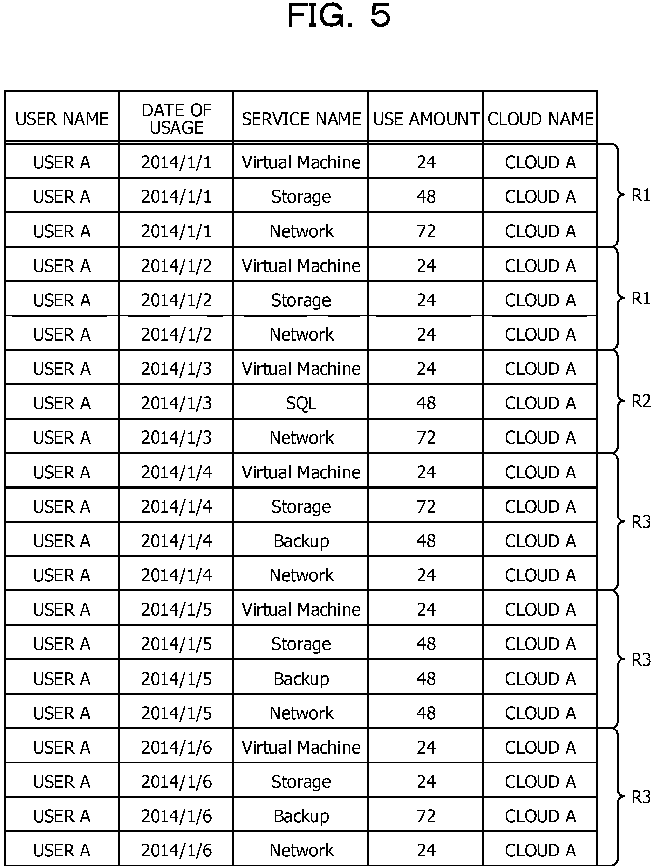

FIG. 5 illustrates the service set usage information 41 in FIG. 4 after the abstraction. In contrast to FIG. 4, the value of "service name" is abstracted as any one of "Virtual Machine", "Storage", "Network", "SQL", and "Backup" in FIG. 5. "Virtual Machine", "Storage", "Network", "SQL", and "Backup" are each identification information indicating the type of a service. For example, "Virtual Machine", "Storage", "Network", "SQL", and "Backup" represent a virtual server use service, a storage use service, a network use service, a SQL function use service, and a backup function use service, respectively.

In Embodiment 1, the abstraction is made based on the type of a service, but the predetermined attribute at the abstraction may be, for example, some or all of a location (position) at which a service is provided, an operating system (OS) on which the service operates, and the performance of the service.

(Extraction)

The extraction unit 26 extracts the modal configuration from the configuration information. The modal configuration is the configuration of a service set used by a user for the longest duration in a predetermined duration. The modal configuration is extracted for each user.

Specifically, the extraction unit 26 specifies a service set used by a user by referring to a combination of the "service names" of elements of a record group having the same values of "user" and "date of usage" in the configuration information. Then, the extraction unit 26 specifies the configuration of a service set used for the longest duration by counting the "date of usage" of each service set, and extracts this configuration as the modal configuration.

The following describes an example of extracting the modal configuration of the user A from the service set usage information 41 in FIG. 5. Record groups each having the same values of "user" and "date of usage" are record groups R1, R2, and R3. The use durations of the record groups R1, R2, and R3 are found to be two days, one day, and three days, respectively, by referring to "date of usage". Accordingly, the extraction unit 26 performs such an extraction that the modal configuration of the user A is the configuration of the group R3 having the longest use duration, in other words, a service set of "Virtual Machine", "Storage", "Network", and "Backup".

(Configuration Clustering)

The configuration clustering unit 27 clusters users into configuration clusters depending on the similarity between the configurations of service sets by referring to the configuration information. The configuration clustering may be performed for users of the same cloud or for users of all clouds, without considering the clouds. When the configuration clustering is performed for each cloud, users categorized in each configuration cluster are users who used the same cloud. When the clustering is performed for all users, users categorized into each configuration cluster are a mixture of users who used different clouds. Embodiment 1 describes an example in which the configuration clustering is executed for each cloud.

Specifically, indices of the similarity used in the configuration clustering are a configuration distance (C_Dist) between users and a configuration difference (Diff) between users. The configuration distance between users is the sum of each difference between the numbers of uses of service types. The configuration difference between users is the sum of the number of usage mismatches between service types.

In the following, N represents the total number of service types, and each service type is allocated with an index of 1 to N and written as service type n ($1 \leq n \leq N$) using the allocated index. $S(u_n)$ represents the number of uses of service type n of user u. With these notations, the configuration distance and difference between users $u_1$ and $u_2$ are expressed in Expressions 1 and 2 below, respectively.

$$C\_Dist(u_1, u_2) = \sum_{n=1}^{N} S_{u_1}(n) - S_{u_2}(n)$$

Expression 1

$$Diff(u_1, u_2) = \sum_{n=1}^{N} Diff_n(u_1, u_2)$$

Expression 2

$$Diff_n(u_1, u_2) = \begin{cases} 0 & S_{u_1}(n) = 0, \quad S_{u_2}(n) = 0 \\ 0 & S_{u_1}(n) \neq 0, \quad S_{u_2}(n) \neq 0 \\ 1 & otherwise \end{cases}$$

The following describes a case in which the configuration information of the user A is expressed as "VM $\times$ 2, Storage $\times$ 2", and the configuration information of the user B is expressed as "VM $\times$ 1, Storage $\times$ 1, Backup $\times$ 1". In this case, the absolute value of a difference in the number of uses is |2-1|, |2-1|, and |0-1| for the service types "VM", "Storage", and "Backup", respectively. Thus, the configuration distance between the user A and the user B is the sum of these values, which is |2-1|+|2-1|+|0-1|=3. When the usage of each service is represented as "1" or "0", the absolute value of a difference in the usage is |1-1|, |1-1|, and |0-1| for the service types "VM", "Storage", and "Backup", respectively. Thus, the configuration difference between the user A and the user B is |1-1|+|1-1|+|0-1|=1.

The configuration clustering unit 27 clusters, into an identical configuration cluster, users between which the configuration distance and difference as described above are each equal to or smaller than a predetermined threshold. The configuration clustering unit does not cluster, into any configuration cluster, a user with the distance and difference each being larger than the predetermined threshold for any other user. For convenience, such a user who is not clustered into any configuration cluster is clustered into a cluster called an independent user cluster. In this manner, a user having a small similarity to other users is not forcedly clustered into a configuration cluster, which leads to an improved accuracy of clustering based on configuration.

Then, the configuration clustering unit 27 stores the identification information of a user and the identification information of a configuration cluster into which the user is categorized, in association with each other in the configuration cluster information 42.

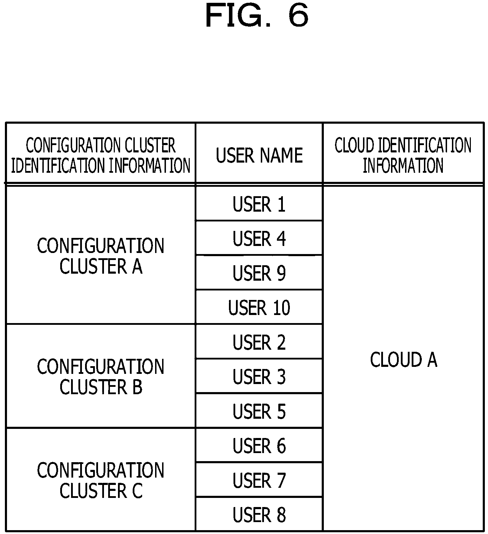

The configuration cluster information 42 indicates a user belonging to each configuration cluster. FIG. 6 illustrates an exemplary configuration of the configuration cluster information 42. In FIG. 6, the configuration cluster information 42 includes data items of "configuration cluster identification information", "user name", and "cloud identification information". These data items are associated with one another for each record (row). "Configuration cluster identification information" is the identification information of a configuration cluster. "User name" is the identification information of a user. "Cloud identification information" is the identification information of a cloud used by the user. In the example in FIG. 6, users 1, 4, 9, and 10 belong to a configuration cluster A.

The configuration clustering may use one of the distance and difference as the index of the similarity.

(Usage History Clustering)

The usage history clustering unit 28 further clusters users in each configuration cluster into use amount clusters depending on the similarity of the usage of each component (service type) of a service set by referring to the usage information.

Specifically, the index of the similarity used in the usage history clustering is a correlation distance (R_Dist) of the usage between users. The correlation distance of the usage between users is calculated as the sum of differences in correlations among users belonging to the same configuration cluster.

The correlation of the usage is a value indicating a degree to which the service usages (usage histories) of users are similar to each other. Specifically, the correlation is represented by a coefficient of correlation of time-series change of the service use amount. The coefficient of correlation is calculated for each service type between users. The coefficient of correlation is a value in a range of 1 to -1.

In the following, N represents the total number of services, and each service is allocated with an index of 1 to N and written as service n ($1 \leq n \leq N$) using the allocated index. $R_{x,y}(n)$ represents the coefficient of correlation of service n between a user x and a user y. With these notations, the distance (R_Dist(u$_1$,u$_2$)) of the correlation of the usage between users u$_1$ and u$_2$ is expressed in Expression 3 below.

$$R\_Dist(u_1, u_2) = \sum_{u=1}^{M} |R_{u_1,u}(n) - R_{u_2,u}(n)|$$

Expression 3

The following describes an example of calculation of the correlation distance for the service type of "Virtual Machine" of a configuration cluster including users 1, 4, 9, and 10. First, the usage history clustering unit 28 produces a correlation matrix including the coefficient of correlation between every pair of all users in the configuration cluster for the service type of "Virtual Machine".

The coefficient of correlation between users is calculated based on the usage information. Specifically, the usage history clustering unit 28 acquires, for the modal configuration of each user, time-series data indicating the use amounts on dates of usage in time series from the usage information. This time-series data may be expressed as a function of time t. The usage history clustering unit 28 sets a start date of usage to be "t=0" for each user and compares this time-series data function, thereby calculating the coefficient of correlation between every pair of users. The usage history clustering unit 28 stores the coefficient of correlation calculated for every pair of users in this manner in the correlation matrix.

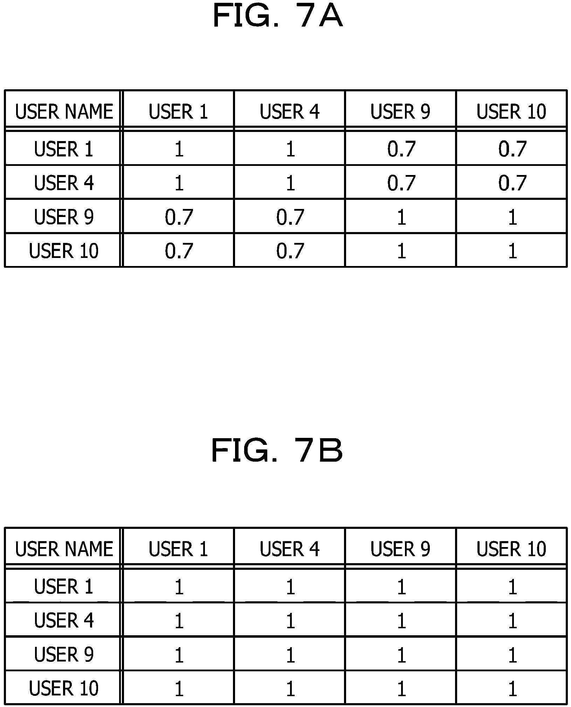

FIGs. 7A and 7B each illustrate an exemplary correlation matrix. FIG. 7A illustrates the correlation matrix of coefficients of correlation for the service type of "Virtual Machine". FIG. 7B illustrates the correlation matrix of coefficients of correlation for the service type of "Storage". The correlation matrix includes a user name as an item and a coefficient of correlation as an element. For example, in FIG. 7A, the coefficient of correlation of user 1 is "1", "1", "0.7", and "0.7" for users 1, 4, 9, and 10, respectively.

The usage history clustering unit 28 uses such a correlation matrix to calculate the correlation distance for each service type. In the example in FIG. 7A, the correlation distance between user 1 and user 9 is calculated as |1-1|+|1-1|+|0.7-0.7|+|0.7-0.7|=0 by Expression 3 described above. For example, the correlation distance between user 1 and user 9 is calculated as |1-0.7|+|1-0.7|+|0.7-1|+|0.7-1|=1.2.

As described above, for example, the calculation of the correlation distance between user 1 and user 4 is based not only on the correlation between user 1 and user 4 but also on the correlation with any other user in the same configuration cluster, including the correlation between user 1 and user 9 and the correlation between user 2 and user 9. This leads to an improved accuracy of clustering based on the correlation of the usage.

The usage history clustering unit 28 clusters, into an identical use amount cluster, users between which the correlation distance as described above is equal to or smaller than the predetermined threshold. The usage history clustering unit 28 does not cluster, into any use amount cluster, a user with the correlation distance being larger than the predetermined threshold for any other user.

As described above, the correlation matrix between users is produced for each service type. In other words, a use amount cluster is formed for each service type.

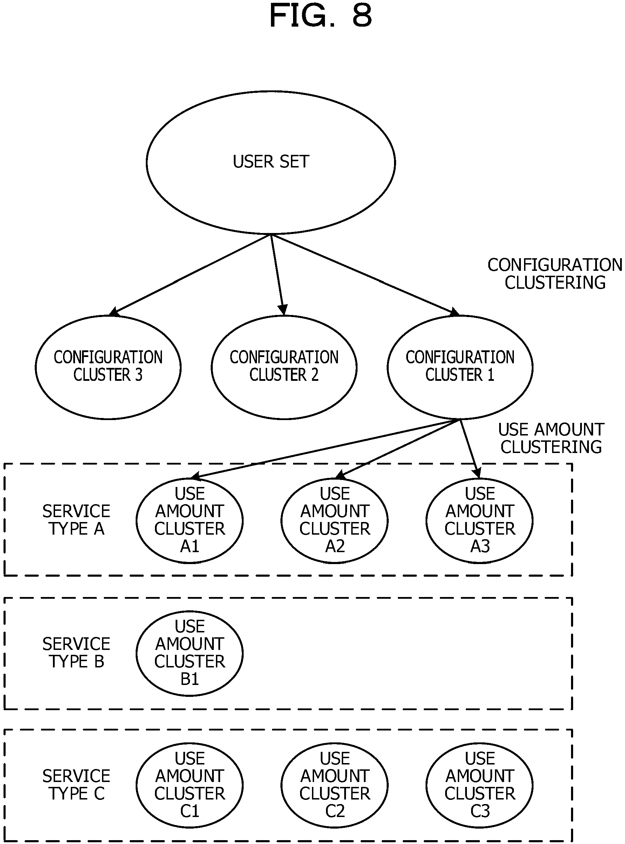

FIG. 8 is an explanatory diagram of configuration clusters and use amount clusters formed for each service type. In FIG. 8, the configuration clustering categorizes each user into any one of the configuration clusters or an independent user cluster. In FIG. 8, each user is clustered in any one of configuration clusters 1 to 3. The use amount clustering further categorizes each user belonging to a configuration cluster into any one of the use amount clusters or an independent user cluster for each service type. In FIG. 8, the use amount clustering based on the correlation of the use amount of a service type A clusters users in a configuration cluster 1 into use amount clusters A1 to A3. The use amount clusters A1 to A3 correspond to the service type A. The use amount clustering based on the correlation of the use amount of a service type B clusters the users in the configuration cluster 1 into a use amount cluster B1 corresponding to the service type B. The use amount clustering based on the correlation of the use amount of the service type A clusters the users in the configuration cluster 1 into use amount clusters C1 to C3 corresponding to a service type C. As described above, users clustered based on the correlation of the use amount of a service type are categorized into use amount clusters corresponding to this service type or an independent user cluster.

After the use amount clustering as described above, the usage history clustering unit 28 stores a user and a use amount cluster into which this user is clustered, in association with each other in the use amount cluster information 43. Specifically, the usage history clustering unit 28 stores, for example, the identification information of the use amount cluster, the identification information of the user of categorized into the use amount cluster, identification information indicating the corresponding service type, and the identification information of a configuration cluster to which the user belongs, in association with one another in the use amount cluster information 43.

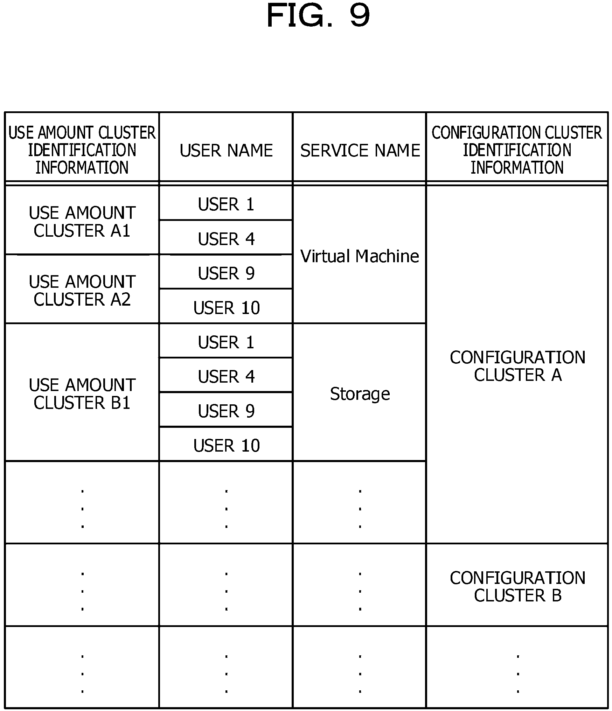

The use amount cluster information 43 indicates a user belonging to a use amount cluster. FIG. 9 illustrates an exemplary configuration of the use amount cluster information 43. In FIG. 9, the use amount cluster information 43 includes data items of "use amount cluster identification information", "user name", "service name", and "configuration cluster identification information". These data items are associated with one another for each record (row).

"Use amount cluster identification information" is the identification information of a use amount cluster. "User name" is the identification information of a user. "Service name" is the identification information of the service type corresponding to the use amount cluster. "Configuration cluster identification information" is the identification information of a configuration cluster to which the user belongs.

In the example in FIG. 9, users 1 and 4 belong to a use amount cluster A1, and users 9 and 10 belong to a use amount cluster A2.

(Pattern Generation)

The generation unit 29 uses the use amount cluster information 43 to generate information (pattern) indicating the usage tendency of each service type of each service set having a similar configuration. Specifically, the generation unit 29 averages, for each use amount cluster, a value indicating a resource use amount of each user included in this use amount cluster. In other words, the generation unit 29 first refers to the use amount cluster information 43 to specify a group of users belonging to the same use amount cluster. Then, the generation unit 29 acquires, for the modal configuration of each user in the specified group of users, time-series data indicating the use amounts on dates of usage in time series from the usage information. Such time-series data may be expressed as a function of time t. The generation unit 29 sets the start date of usage of the modal configuration for each user to be "t=0". Then, the generation unit 29 averages, for each time t, the use amounts of all users belonging to the same use amount cluster so as to generate a pattern. This generated pattern is information indicating the time-series average values of the use amounts of all users belonging to the use amount cluster.

The generation unit 29 converts a pattern into a price based on the pattern generated in this manner and the price information 45. Hereinafter, the pattern converted into the price is referred to as a price pattern.

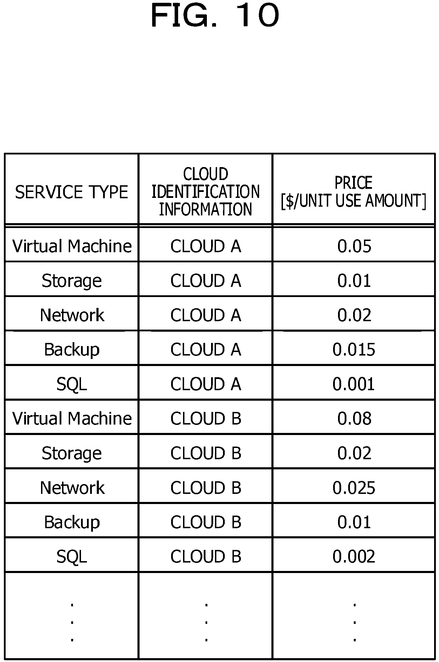

The price information 45 indicates a price per unit use amount of each service of each cloud. FIG. 10 illustrates an example of the price information 45. In FIG. 10, the price information 45 includes data items of "service type", "cloud identification information", and "price". These data items are associated with one another for each record (row). "Service type" is the identification information of the type of a service. "Cloud identification information" is the identification information of a cloud that provides the service. "Price" illustrates a price per unit use amount for the type of the service provided by the cloud.

The generation unit 29 searches for a record having the identification information of the service type corresponding to a use amount cluster and the identification information of the cloud that match "service type" and "cloud identification information", respectively, and acquires the value of "price" of the retrieved record. Then, the generation unit 29 converts the pattern of the usage tendency into a price based on the acquired price per unit use amount.

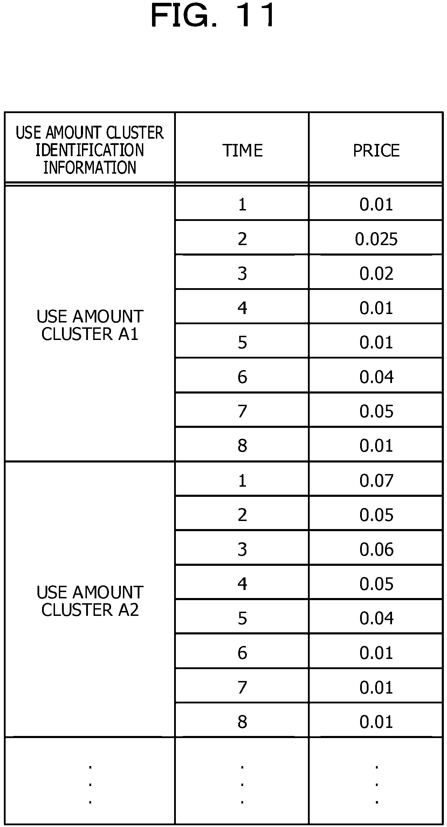

The generation unit 29 stores information indicating the pattern of the usage tendency converted into the price in the pattern information 44. The pattern information 44 indicates each pattern of the usage tendency as a price. FIG. 11 illustrates an exemplary configuration of the pattern information 44. The pattern information 44 includes data items of "use amount cluster identification information", "time", and "price". These data items are associated with one another for each record (row).

"Use amount cluster identification information" is the identification information of a use amount cluster. Since the pattern of the usage tendency is generated for each use amount cluster, the identification information of the use amount cluster is also the identification information of the pattern of the usage tendency. The pattern of the usage tendency is indicated as a price with "time" and "price". "Time" indicates a time with a predetermined interval. "Price" is information indicating the average value of the usage fees of users included in the use amount cluster at the time indicated by "time".

(Search)

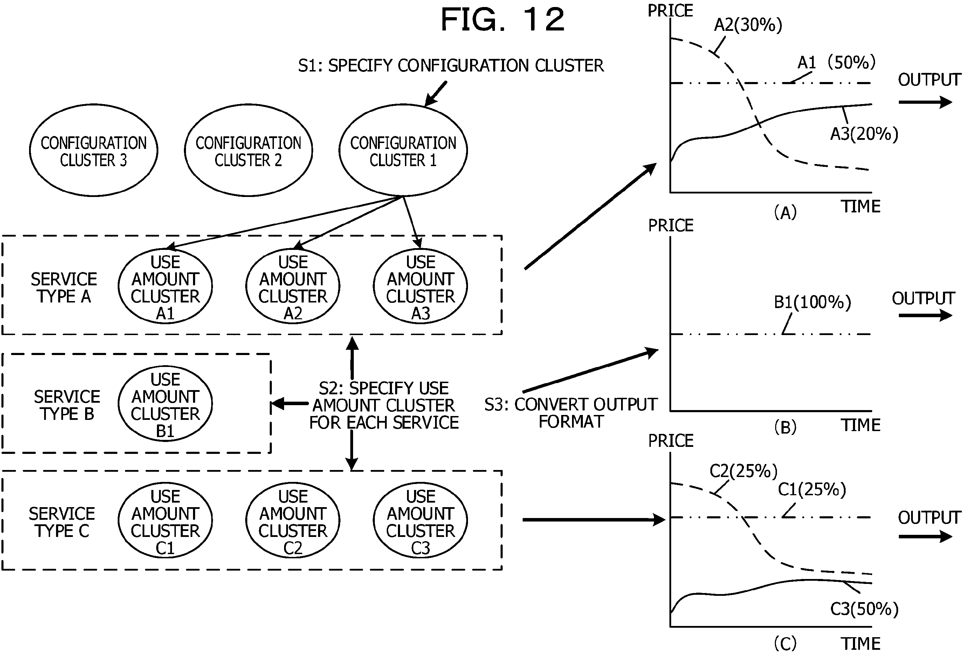

The search unit 32 searches the pattern information 44 for the pattern corresponding to a configuration cluster having a configuration similar to a configuration indicated by the requested configuration information, and outputs the pattern. The search by the search unit 32 will be described with reference to FIG. 12. FIG. 12 is an explanatory diagram of the search.

In FIG. 12, when the reception unit 31 receives the requested configuration information from the user terminal 22, the search unit 32 first specifies, based on the configuration cluster information 42, a configuration cluster having a configuration similar to a configuration indicated by the requested configuration information (S1). This specification uses, as the index of the similarity, any one or both of the configuration distance and difference described above. In other words, the search unit 32 abstracts the requested configuration information based on, for example, a service type, and specifies a configuration cluster of which any one or both of the configuration distance and difference are smallest for a configuration indicated by the abstracted requested configuration information. In the calculation of the configuration distance, the search unit 32 compares a representative configuration of the configuration cluster and the configuration indicated by the requested configuration information. The representative configuration of the configuration cluster is an average configuration of components used by all users included in the configuration cluster. In other words, the number of uses of service n of the representative configuration of the configuration cluster is the average value of the number of uses of service n for each user belonging to the configuration cluster. In FIG. 12, the configuration cluster 1 is specified.

Next, the search unit 32 specifies a group of use amount clusters corresponding to the specified configuration cluster based on the use amount cluster information 43 (S2). The group of use amount clusters is specified for each service type. In FIG. 12, the use amount clusters A1 to A3 are specified as the use amount clusters corresponding to the service type A. The use amount cluster B1 is specified as the use amount cluster corresponding to the service type B. The use amount clusters C1 to C3 are specified as the use amount clusters corresponding to the service type C. Then, the search unit 32 acquires the pattern corresponding to each service type of the specified group of use amount clusters from the pattern information 44. Specifically, the search unit 32 acquires the values of "time" and "price" of a record of which "use amount cluster identification information" of the pattern information 44 matches the identification information of the specified use amount cluster.

Next, the search unit 32 converts the acquired pattern into an output format for a user (S3). Examples of this output format include a first format in which a pattern of each service type is output. The search unit 32 further outputs a ratio of the number of users belonging to the use amount cluster corresponding to each pattern. This ratio of the number of users is the ratio of the number of users belonging to the use amount cluster relative to the number of users belonging to the configuration cluster specified at S1. The search unit 32 may further output the identification information of a cloud used by a user belonging to the use amount cluster corresponding to each pattern. This identification information of a cloud may be specified by referring to the configuration cluster information 42.

FIG. 12 illustrates an example of the conversion into the first format. In the example in FIG. 12, patterns of the service types A, B, and C are output as broken line graphs A to C with the time as the abscissa axis and the price with the ordinate axis. Each line illustrates the pattern of a use amount cluster. A number in parentheses in the name of each line indicates the ratio of the number of users. For example, line "A1" illustrates the pattern of the use amount cluster A1, and "50%" in parentheses of line "A1" indicates that the ratio of the number of users belonging to the use amount cluster A1 relative to the number of users in the configuration cluster 1 is 50%. The ratio of the number of users presents the strength of the tendency of each price pattern to a user.

The search unit 32 may further label each pattern based on a predetermined rule. For example, the search unit 32 may label, as a "temporary usage type", a pattern having a high usage fee temporarily only for a predetermined duration and no usage fee generated in the other duration. For example, the search unit 32 may label, as a "periodical usage type", a pattern having a periodical change in a usage fee. For example, the search unit 32 may label, as an "increasing usage type", a pattern having a usage fee increasing over time. The rule of the labeling may be previously stored in the storage unit 30, or may be input through the user terminal 22 or a predetermined input device. The search unit 32 may further simultaneously output patterns to which the same label is attached.

The search unit 32 may further output patterns of all clouds for each pattern to which the same label is attached. This allows a user to compare price patterns between the clouds. This comparison allows the user to predict which cloud to be used to establish and operate a target service set at a most reduced cost.

The search unit 32 may further output the identification information of a pattern and a cloud having the lowest price sum in a predetermined duration.

Examples of the output format include a second format in which the pattern of a service type having the largest influence on a price among service types of a specified use amount cluster is output. The service type (hereinafter referred to as an influential type) having the largest influence on a price is specified based on any one or both of the price information 45 and the price pattern. For example, the search unit 32 may specify as the influential type, a service type having the highest average of the price pattern of each service. In the second format, a predetermined value calculated from the pattern of another service type different from the influential type may be added to the pattern of the influential type and this sum may be output. Examples of the value calculated from the pattern of the other service type include an averaged price pattern of patterns for each service type, or a price pattern having the largest number of users for each service type.

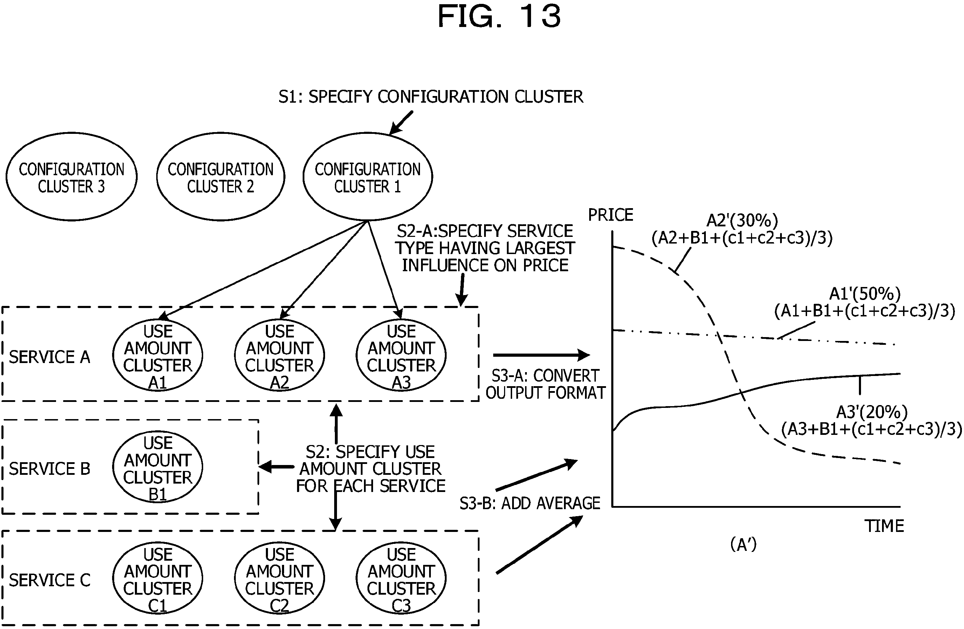

FIG. 13 is an explanatory diagram of a second format of outputting each pattern of the influential type service to which averaged patterns of the other services are added. As illustrated in FIG. 13, similarly to S1 and S2 in FIG. 12, the search unit 32 specifies a group of use amount clusters for each service. Then, the search unit 32 specifies the influential type based on the price information 45 and each price pattern (S2-A). In FIG. 13, the service type A is specified as the influential type. Thereafter, the search unit 32 averages the price pattern for each service different from the specified influential type. For the service B with a single use amount cluster, the price pattern of the use amount cluster does not have to be averaged. For the service C, the search unit 32 averages the price patterns of the use amount clusters C1 to C3 to calculate the averaged pattern (hereinafter referred to as an average pattern). Specifically, the average pattern of the service C is given by (C1(t)+C2(t)+C3(t))/3 where the functions of time t, C1(t) to C3(t), represent the price patterns of the use amount clusters C1 to C3, respectively. Having calculated the average patterns of the services B and C, the search unit 32 adds the average pattern of each service to each price pattern of the service A (S3-B). Then, the search unit 32 outputs the price pattern of the service A obtained by the addition (S3-A). In the example in FIG. 13, each price pattern of the service A to which the average pattern is added is output in the format of a broken line graph (A') with time as the abscissa axis and the price as the ordinate axis.

In the second format, a pattern having the largest number of users may be selected for each price pattern of a type different from the influential type, the selected pattern may be added to the pattern of the influential type, and this sum may be output. The example in FIG. 13 describes the influential type is the service A. In this case, types different from the influential type are the service types B and C. For the service type B, the use amount cluster B1 is selected as a pattern having the largest number of users. For the service type C, the use amount cluster C3 having the largest number of users is selected among the use amount clusters C1 to C3. The search unit 32 adds the price patterns of the selected use amount clusters B1 and C3 to each price pattern of the influential type, and outputs this sum.

The output format may be specified through the user terminal 22. The outputting may be in the format of a use amount pattern in place of the price pattern.

(Process of Learning Stage)

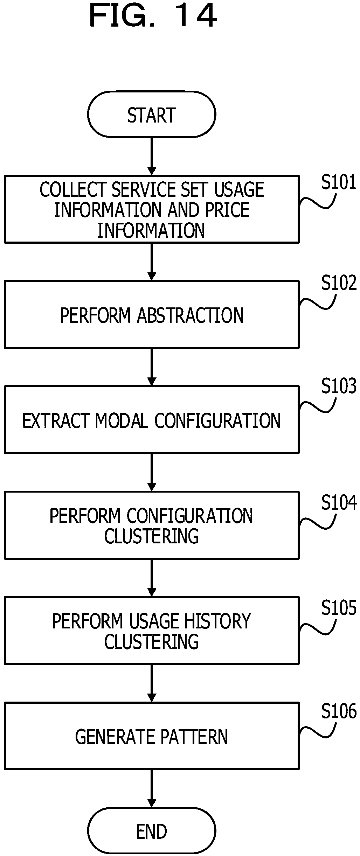

Next follows a description of the process of the learning stage. FIG. 14 is an exemplary detailed flowchart of the process of the learning stage.

In FIG. 14, first, the collection unit 24 collects the service set usage information 41 and the price information 45 from one or more servers (S101). Then, the collection unit 24 stores service set identification information and the price information 45 in the storage unit 30.

Next, the abstraction unit 25 abstracts each component of a service set indicated by configuration information received by the collection unit 24 based on the type or predetermined attribute of the component (S102).

Next, the extraction unit 26 extracts the modal configuration of each user from the configuration information (S103).

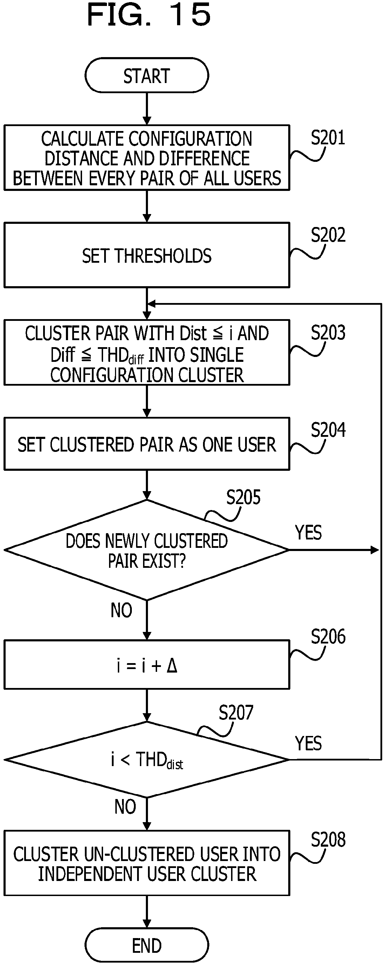

Next, the configuration clustering unit 27 clusters users into configuration clusters depending on the similarity between the configurations of the service sets by referring to the configuration information (S104). The configuration clustering unit 27 stores a result of this configuration clustering in the configuration cluster information 42. The detailed process of the configuration clustering will be described later with reference to FIG. 15.

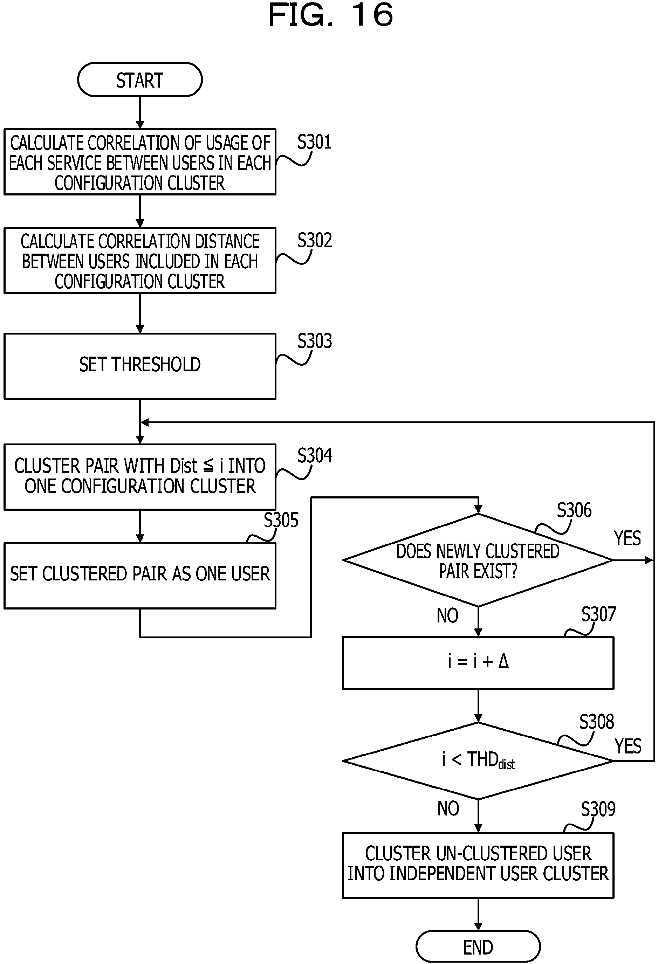

Next, the usage history clustering unit 28 further clusters users in each configuration cluster into use amount clusters depending on the similarity of the usage of the service set by referring to the usage information and the configuration cluster information 42 (S105). The usage history clustering unit 28 stores a result of this usage history clustering in the use amount cluster information 43. The detailed process of the use amount clustering will be described later with reference to FIG. 16.

Next, the generation unit 29 generates the price pattern of each service type of each service set having a similar configuration based on the use amount cluster information 43 and the price information 45 (S106). Then, the generation unit 29 stores the generated price pattern in the pattern information 44.

Then, the processing at the learning stage ends.

(Process of Configuration Clustering)

Next follows a description of the process of the configuration clustering executed at S104. FIG. 15 is an exemplary detailed flowchart of the process of the configuration clustering.

In FIG. 15, first, the configuration clustering unit 27 calculates the configuration distance (Dist) and difference (Diff) between every pair of all users of each cloud (S201). The configuration distance (Dist) and difference (Diff) are calculated by using Expressions 1 and 2 described above, respectively.

Next, the configuration clustering unit 27 sets three thresholds of "Δ", "$THD_{dist}$", and "$THD_{diff}$" used in the configuration clustering (S202). "Δ" is a threshold for setting the accuracy of the configuration clustering. "$THD_{dist}$" is a threshold for setting a difference allowed in the number of used services between users belonging to an identical cluster. Specifically, "$THD_{dist}$" is a maximum value of the configuration distance between users categorized in an identical configuration cluster. A reduced value of "$THD_{dist}$" leads to reduced allowance of the difference in the number of used services. "$THD_{diff}$" is a threshold for setting a difference allowed in the kinds of used services between users belonging to an identical cluster. Specifically, "THD$_{diff}$" is a maximum value of the configuration difference between users categorized in an identical configuration cluster. A reduced value of "THD$_{diff}$" leads to reduced allowance of the difference in the kinds of used services. The configuration clustering unit 27 performs an initialization by substituting "0" into a control variable "i" used in the configuration clustering. The values of the thresholds "Δ", "THD$_{dist}$", and "THD$_{diff}$" may be previously stored in a predetermined storage region.

Next, the configuration clustering unit 27 clusters, into a configuration cluster, a pair of users of which the configuration distance is equal to or smaller than the variable "i" and the configuration difference is equal to or smaller than the threshold "THD$_{diff}$" (S203).

Next, the configuration clustering unit 27 sets the pair of users clustered at S203 as a single representative user (S204). The representative user represents all users belonging to the corresponding configuration cluster, and is updated at each execution of the processing at S204. A configuration used by the representative user is an averaged configuration of components used by the pair clustered at S203. In other words, the number of uses of service n of the configuration of the representative user is an average value of the number of uses of service n of each user in the pair clustered at S203.

For example, when a pair of user 1 and user 2 are clustered, single representative user 1-2 is set. Assume such a case that the configuration of user 1 is "virtual machine × 2, storage × 1, backup × 0, SQL × 0", and the configuration of user 2 is "virtual machine × 0, storage × 1, backup × 1, SQL × 0". In this case, the numbers of uses of services of representative user 1-2 are "virtual machine" × ((2+0)/2=1), "storage" × ((1+1)/2=1), "backup" × ((1+0)/2=0.5), and "SQL" × ((0+0)/2=0).

Next, the configuration clustering unit 27 determines whether a pair of users newly clustered at the latest execution of S203 exist (S205). In other words, the configuration clustering unit 27 determines whether a pair of users of which the configuration distance is equal to or smaller than the variable "i" and the configuration difference is equal to or smaller than the threshold "THD$_{diff}$" exist. If it is determined that the newly clustered pair exist (Yes at S205), the configuration clustering unit 27 advances the process to S203 to repeat the processing at S203 and S204.

If it is determined that no newly clustered pair exist (No at S205), the configuration clustering unit 27 substitutes "i+Δ" into the control variable "i" (S206).

Next, the configuration clustering unit 27 determines whether the variable "i" is smaller than the threshold "THD$_{dist}$" (S207). If it is determined that the variable "i" is smaller than the threshold "THD$_{dist}$" (Yes at S207), the configuration clustering unit 27 advances the process to S203 to repeat the processing at S203 or later.

If it is determined that the variable "i" is equal to or larger than the threshold "THD$_{dist}$" (No at S207), the configuration clustering unit 27 clusters a user not clustered into any configuration cluster, into an independent user cluster (S208). This ends the process.

As described above, the configuration clustering clusters users in a descending order of the similarity therebetween by using the threshold "Δ" and the control variable "i". This enables clustering of users having configurations with a higher similarity therebetween into an identical cluster.

(Process of Usage History Clustering)

Next follows a description of the process of the usage history clustering executed at S105. FIG. 16 is an exemplary detailed flowchart of the process of the usage history clustering.

In FIG. 16, first, the usage history clustering unit 28 calculates the correlation of the usage of each service between users in each configuration cluster (S301). The correlation of the usage of each service is calculated between all users belonging to a configuration cluster.

Next, the usage history clustering unit 28 calculates the correlation distance between users included in an identical configuration cluster (S302). The usage history clustering unit 28 calculates the correlation distance for each service. The usage history clustering unit 28 calculates the correlation distance of the usage for all configuration clusters.

Next, the usage history clustering unit 28 sets the two thresholds "Δ" and 'THD$_{dist}$" used in the usage history clustering (S303). "Δ" is a threshold for setting the accuracy of the usage history clustering. "THD$_{dist}$" is a threshold for setting a difference allowed in the number of used services between users belonging to an identical cluster. Specifically, "THD$_{dist}$" is a maximum value of the correlation distance of the usage between users categorized in an identical usage history cluster. A reduced value of "THD$_{dist}$" leads to reduced allowance of the difference in the number of used services. The usage history clustering unit 28 performs an initialization by substituting "0" into the control variable "i" used in the usage history clustering. The values of the thresholds "Δ" and "THD$_{dist}$" may be previously stored in a predetermined storage region.

Next, the usage history clustering unit 28 clusters a pair of users of which the correlation distance is equal to or smaller than the variable "i" into a single use amount cluster (S304).

Next, the usage history clustering unit 28 sets the pair of users clustered at S304 as single representative user R (S305). Representative user R represents all users belonging to each use amount cluster, and is updated at each execution of the processing at S305. A configuration used by representative user R is an averaged usage of the pair clustered at S304. In other words, the use amount of service n of representative user R is an average value of the use amount of service n of each user in the pair clustered at S304.

For example, when a pair of user 1 and user 2 are clustered, single representative user R(1-2) is set. Assume such a case that the use amount of the service A of user 1 may be expressed as a function of time t, R1(t), and the use amount of the service A of user 2 may be expressed as R2(t). In this case, the use amount of the service A of representative user R(1-2) is (R1(t)+R2(t))/2.

Next, the usage history clustering unit 28 determines whether a pair newly clustered at the latest execution of S304 exist (S306). In other words, the usage history clustering unit 28 determines whether a pair of which the correlation distance is equal to or smaller than the variable "i" exist. If it is determined that a pair newly clustered exist (Yes at S306), the usage history clustering unit 28 advances the process to S304 to repeat the processing at S304 and S305.

If it is determined that no newly clustered pair exist (No at S306), the usage history clustering unit 28 substitutes "i+Δ" into the control variable "i" (S307).

Next, the usage history clustering unit 28 determines whether the variable "i" is smaller than the threshold "THD$_{dist}$" (S308). If it is determined that the variable "i" is smaller than the threshold "THD$_{dist}$" (Yes at S308), the usage history clustering unit 28 advances the process to S304 to repeat the processing at S304 or later.

If it is determined that the variable "i" is larger than the threshold "THD$_{dist}$" (No at S308), the usage history clustering unit 28 clusters a user not clustered in any use amount cluster, into an independent user cluster R (S309). This ends the process.

Similarly to the configuration clustering, the usage history clustering clusters users in a descending order of the similarity of the usage therebetween by using the threshold "Δ" and the control variable "i". This enables clustering of users having usages with a higher similarity therebetween into an identical cluster.

(Process of Providing Stage)

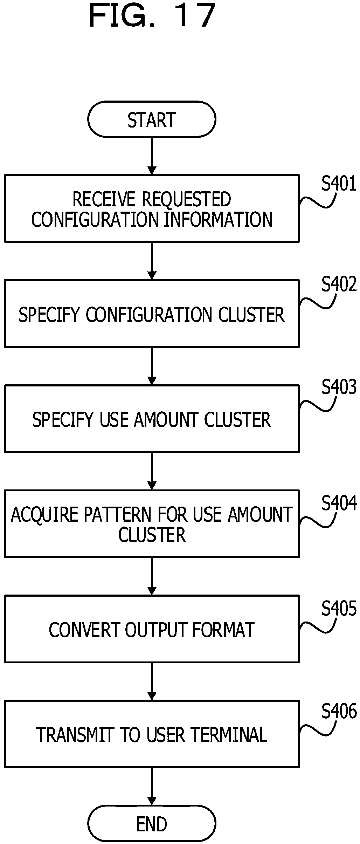

Next follows a description of the process of the providing stage. FIG. 17 is an exemplary detailed flowchart of the process of the providing stage.

In FIG. 17, first, the reception unit 31 receives the requested configuration information from the user terminal 22 (S401).

Next, the search unit 32 specifies a configuration cluster having a configuration similar to a configuration indicated by the requested configuration information based on the configuration cluster information 42 (S402). This specification uses, as the index of the similarity, any one or both of the configuration distance and difference.

Next, the search unit 32 specifies a group of use amount clusters corresponding to the specified configuration cluster based on the use amount cluster information 43 (S403). This specification is performed for each service type.

Next, the search unit 32 acquires the pattern corresponding to each service type of the specified group of use amount clusters from the pattern information 44 (S404).

Next, the search unit 32 converts the acquired pattern into an output format to a user and outputs the converted pattern (S405).

Next, the transmission unit 33 transmits the pattern information 44 converted in the output format to a user to the user terminal 22 (S406).

This ends the process.

The process (S101 to S106) of the learning stage described above may be executed before S401 or between S401 and S402.

(Configuration of Information Providing Device)

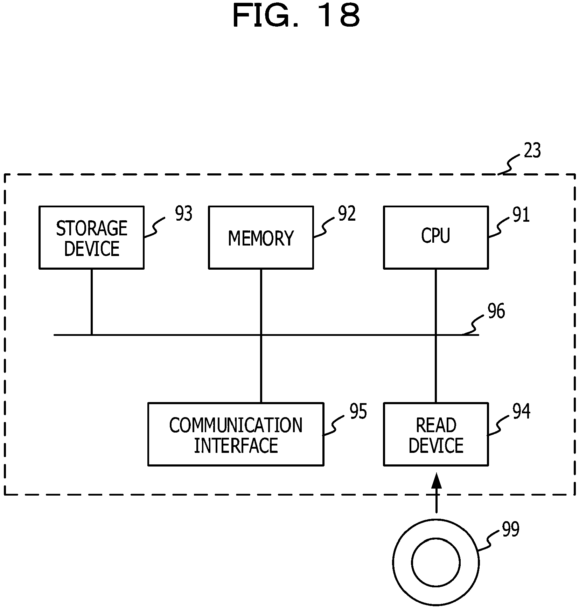

Next follows a description of an exemplary hardware configuration of the information providing device 23 according to Embodiment 1. FIG. 18 illustrates an exemplary hardware configuration of the information providing device 23 according to Embodiment 1.

In FIG. 18, the information providing device 23 includes a central processing unit (CPU) 91, a memory 92, a storage device 93, a read device 94, and a communication interface 95. The CPU 91, the memory 92, the storage device 93, the read device 94, and the communication interface 95 are connected through a bus 96, for example.

The CPU 91 uses the memory 92 execute a program that describes the procedure of the above-described flowchart, thereby providing part or all of the functionalities of the collection unit 24, the abstraction unit 25, the extraction unit 26, the configuration clustering unit 27, the usage history clustering unit 28, and the generation unit 29. The CPU 91 uses the memory 92 to execute the program that describes the procedure of the above-described flowchart, thereby providing part or all of the functionalities of the reception unit 31, the search unit 32, and the transmission unit 33.

The memory 92 is, for example, a semiconductor memory including a random access memory (RAM) region and a read only memory (ROM) region. The memory 92 provides part or all of the functionality of the storage unit 30. The storage device 93 is, for example, a hard disk. The storage device 93 may be a semiconductor memory such as a flash memory. Alternatively, the storage device 93 may be an external recording device. The storage device 93 may provide the functionality of the storage unit 30.

The read device 94 accesses a detachable storage medium 99 in accordance with an instruction from the CPU 91. The detachable storage medium 99 is achieved by, for example, a semiconductor device (such as a USB memory), a medium (such as a magnetic disk) to and from which information is input and output by magnetic effects, or a medium (such as a CD-ROM or DVD) to and from which information is input and output by optical effects. The read device 94 may not be included in the information providing device 23.

The communication interface 95 communicates with the server device 21 and the user terminal 22 through a network in accordance with an instruction from the CPU 91.

The program according to Embodiment 1 is provided to the information providing device 23 in the following manners, for example.

(1)Previously installed to the storage device 93.
(2)Provided by the detachable storage medium 99.
(3)Provided from a program server (not illustrated) through the communication interface 95.

The information providing device 23 according to Embodiment 1 may be partly achieved by hardware. Alternatively, the information providing device 23 according to Embodiment 1 may be achieved as a combination of software and hardware.

Embodiments of the present disclosure are not limited to the Embodiment described above. Various kinds of configure or embodiments are applicable without departing from the scope of the present embodiment.

(Embodiment 2)

In Embodiment 2 of the present disclosure, in the usage history clustering, the information providing device 23 clusters users in each configuration cluster into use amount clusters based on the sum of the correlation of the usage of each service type. In Embodiment 2, the use amount clusters are common to all service types. In other words, in Embodiment 2, a single pattern is generated in place of the pattern of each service type in a use amount cluster. Thus, a single price pattern is output to the user terminal 22 for all services of each use amount cluster, which facilitates the understanding of the price pattern by a user.

An information providing system according to Embodiment 2 has the same configuration and hardware configuration as those of Embodiment 1. However, the usage history clustering unit 28, the generation unit 29, and the search unit 32 perform different processing.

(Usage History Clustering)

The usage history clustering unit 28 first produces, for each service type, the correlation matrix including the coefficient of correlation between every pair of all users in a configuration cluster. The coefficient of correlation between users is calculated in the same manner as in Embodiment 1.

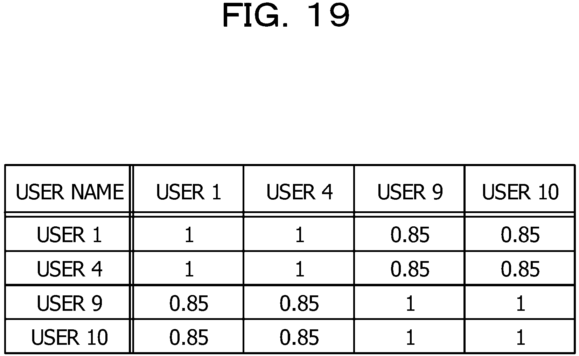

Next, the usage history clustering unit 28 integrates to average the correlation matrices of all services and records a resulting matrix as the correlation matrix of all services. Specifically, the usage history clustering unit 28 averages the coefficient of correlation between every pair over all services. For example, integrating and averaging two correlation matrices illustrated in FIG. 7 generates the correlation matrix of all services illustrated in FIG. 19. In FIG. 19, the coefficient of correlation between every pair is an average value of the corresponding elements of the matrices in FIG. 7A and FIG. 7B.

Having generated the correlation matrix of all services, the usage history clustering unit 28 calculates the coefficient of correlation between users. $R_{x,y}$ represents the coefficient of correlation of all services between users x and y. With this notation, the correlation distance ($RA\_Dist(u_1,u_2)$) of the usage between users $u_1$ and $u_2$ is expressed in Expression 4 below.

$$RA\_Dist(u_1, u_2) = \sum_{u=1}^{M} |R_{u_1,u} - R_{u_2,u}|$$

Expression 4

The usage history clustering unit 28 clusters, into an identical use amount cluster, users of which the above-described correlation distance of all services is equal to or smaller than a predetermined threshold. The usage history clustering unit 28 does not cluster, into any use amount cluster, a user of which the correlation distance is larger than the predetermined threshold for any other user.

Having performed the use amount clustering, the usage history clustering unit 28 stores a user and a use amount cluster into which this user is clustered, in association with each other in the use amount cluster information 43. Specifically, the usage history clustering unit 28 stores, for example, the identification information of the use amount cluster, the identification information of the user categorized in the use amount cluster, and the identification information of a configuration cluster to which the user belongs, in association

with one another in the use amount cluster information 43. The use amount cluster information 43 is the same as that described in FIG. 9. However, the data item of "service name" may be omitted.

(Pattern Generation)

The generation unit 29 generates information (pattern) indicating the usage tendency of each service set having a similar configuration by using the use amount cluster information 43. Specifically, the generation unit 29 averages, for each use amount cluster, a value indicating the resource use amount of each user included in this use amount cluster. In other words, the generation unit 29 first specifies a group of users belonging to the same use amount cluster by referring to the use amount cluster information 43. Then, the generation unit 29 acquires, for the modal configuration of each user of the specified group of users, time-series data indicating the use amounts on dates of usage in time series from the usage information. In Embodiment 2, the use amount of the modal configuration is an average of the use amount of each service of the modal configuration. Such time-series data may be expressed as a function of time t. The generation unit 29 sets the start date of usage of the modal configuration of each user to be "t=0". Then, the generation unit 29 averages, for each time t, the use amounts of all users belonging to the same use amount cluster so as to generate a pattern. This generated pattern is information indicating the time-series average values of the use amounts of all users belonging to the use amount cluster.

The generation unit 29 converts a pattern into a price based on the pattern generated in this manner and the price information 45 so as to generate a price pattern. The price information 45 is the same as described with reference to FIG. 10. However, the data item of "service type" in FIG. 10 may be omitted.

In FIG. 10, the generation unit 29 searches for a record of which the identification information of the cloud corresponding to a use amount cluster matches "cloud identification information", and acquires the value of "price" of the retrieved record. Then, the generation unit 29 converts the pattern of the usage tendency into a price based on the acquired price per unit use amount.

The generation unit 29 stores information indicating the pattern of the usage tendency converted into the price in the pattern information 44. The pattern information 44 is the same as described with respect to FIG. 11.

(Search)

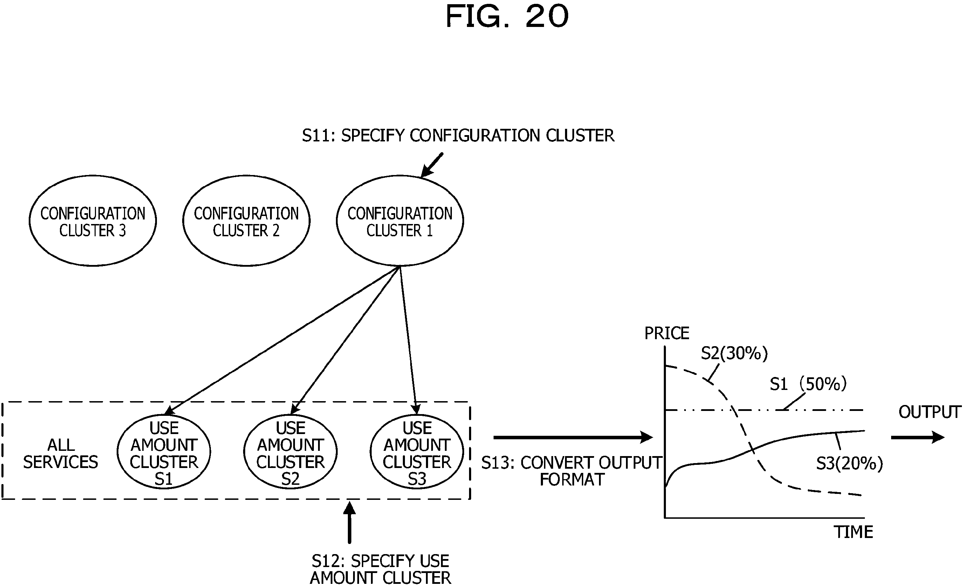

The search unit 32 searches the pattern information 44 for the pattern corresponding to a configuration cluster having a configuration similar to a configuration indicated by the requested configuration information, and outputs the pattern. The search by the search unit 32 will be described with reference to FIG. 20. FIG. 20 is an explanatory diagram of the search according to Embodiment 2.

When the reception unit 31 receives the requested configuration information from the user terminal 22, the search unit 32 first specifies a configuration cluster having a configuration similar to a configuration indicated by the requested configuration information based on the configuration cluster information 42 (S11). This specification of the configuration cluster is the same as that of Embodiment 1. Then, the search unit 32 specifies a group of use amount clusters corresponding to the specified configuration cluster based on the use amount cluster information 43 (S12). The specified group of use amount clusters is the group corresponding to all services. In FIG. 20, use amount cluster S1 to S3 are specified as the use amount clusters corresponding to all services. Then, the search unit 32 acquires the pattern corresponding to each service type of the specified group of use amount clusters from the pattern information 44. Specifically, the search unit 32 acquires the values of "time" and "price" of a record of which "use amount cluster identification information" of the pattern information 44 matches the identification information of any of the specified use amount clusters.

Then, the search unit 32 converts the acquired pattern into an output format to a user and outputs the converted pattern (S13). The conversion into the output format is the same as that of Embodiment 1.

(Embodiment 3)

Embodiment 1 describes the separate processing at the learning stage and the providing stage. In Embodiment 3, having received the requested configuration information from the user terminal 22, the information providing device 23 performs clustering and pattern generation. In Embodiment 3, the information providing device 23 performs the configuration clustering for a configuration similar to the configuration of a service set indicated by the requested configuration information received from the user terminal 22. In this manner, the usage history clustering and the pattern generation do not have to be executed for all configuration clusters unlike Embodiment 1, which reduces a load on the information providing device 23.

An information providing system according to Embodiment 3 has the same configuration and hardware configuration as those of Embodiment 1. However, the units illustrated in FIG. 3 are operated in a different order and different data is targeted.

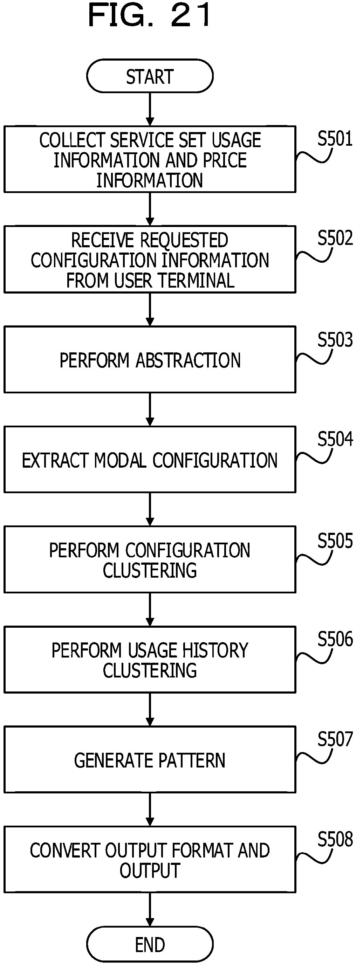

FIG. 21 is an exemplary flowchart of processing by the information providing system according to Embodiment 3. In FIG. 21, the collection unit 24 first collects the service set usage information 41 and the price information 45 from one or more servers (S501). Then, the collection unit 24 stores service set identification information and the price information 45 in the storage unit 30. The processing at S501 has the same detail as that of S101.

Next, the reception unit 31 receives the requested configuration information from the user terminal 22 (S502).

Next, the abstraction unit 25 abstracts each component of a service set indicated by the configuration information received by the collection unit 24 based on the type or predetermined attribute of the component (S503). Similarly, the abstraction unit 25 abstracts each component of a target service set indicated by the requested configuration information received by the reception unit 31 based on the type or predetermined attribute of the component (S503)The abstraction has the same detail as that of Embodiment 1.

Next, the extraction unit 26 extracts the modal configuration of each user from the configuration information (S504). The extraction has the same detail as that of Embodiment 1.

Next, the configuration clustering unit 27 clusters users included in the configuration information into configuration clusters depending on the similarity between the configuration of the target service set and the modal configuration of each user of the configuration information (S505). Specifically, the distance (C_Dist) and the difference (Diff) between the configuration of the target service set and the configuration of the service set of each user included in the configuration information are used indices of the similarity. The configuration clustering unit 27 clusters users of the configuration information of which the configuration distance and difference are each equal to or smaller than a predetermined threshold into an identical configuration cluster. The configuration clustering unit 27 stores a result of this configuration clustering in the configuration cluster information 42. The configuration clustering may use one of the configuration distance and difference as the index of the similarity.

Next, the usage history clustering unit 28 further clusters users in each configuration cluster into use amount clusters depending on the correlation the usage of the service set by referring to the usage information and the configuration cluster information 42 (S506). The usage history clustering unit 28 stores a result of this usage history clustering in the use amount cluster information 43. The use amount clustering has the same detail as that of Embodiment 1.

Next, the generation unit 29 generates the price pattern of each service type of a service set having a configuration similar to the configuration of the target service set based on the use amount cluster information 43 and the price information 45 (S507). Then, the generation unit 29 stores the generated price pattern in the pattern information 44. The pattern generation has the same detail as that of Embodiment 1.

Next, the search unit 32 converts the price pattern generated by the generation unit 29 into an output format to a user, and outputs the converted price pattern (S508). The conversion has the same detail as that of Embodiment 1.

This ends the process.

In Embodiment 3, the configuration clustering is performed based on the distance and difference between the configuration of the target service set and the configuration of the service set of each user included in the configuration information. In other words, a user belonging to a configuration cluster is a user who used a service set having a configuration similar to the configuration of the target service set. In this case, when the number of target service sets is one, the number of configuration clusters is one. Thus, the usage history clustering and the pattern generation do not have to be executed for all configuration clusters, which reduces a load on the information providing device 23.

REFERENCE SIGNS LIST

| | |
|---|---|
| 1 | acquisition unit |
| 2 | reception unit |
| 3 | extraction unit |
| 4 | categorization unit |
| 5 | output unit |
| 10 | information providing device |
| 21 | server device |
| 22 | user terminal |
| 23 | information providing device |
| 24 | collection unit |
| 25 | abstraction unit |
| 26 | extraction unit |
| 27 | configuration clustering unit |
| 28 | usage history clustering unit |
| 29 | generation unit |
| 30 | storage unit |
| 31 | reception unit |
| 32 | search unit |
| 33 | transmission unit |
| 41 | service set usage information |
| 42 | configuration cluster information |
| 43 | use amount cluster information |
| 44 | pattern information |
| 45 | price information |
| 91 | CPU |
| 92 | memory |
| 93 | storage device |
| 94 | read device |
| 95 | communication interface |
| 99 | detachable storage medium |

**Claims**

1. A method for outputting a usage history of a system that includes resources having a plurality of virtual machines, a plurality of information storage devices, a plurality of networks, and a backup device, and that includes a storage device storing first usage history information indicating usage of the resources for each client, the method comprising:

   designating a usage combination of the resources that include the plurality of virtual machines, the plurality of information storage devices, the plurality of networks, and the backup device;
   specifying clients who use the resources of the system in a combination similar to the usage combination within a range of a predetermined threshold;
   extracting the first usage history information corresponding to each of the clients from the storage device;
   categorizing one or more clients, among the clients, having similar time-series changes in the first usage history information into an identical group based on a similarity between the time-series changes in the first usage history information of the clients; and
   outputting, as the usage history, second usage history information indicating a time-series change of the first usage history information of the one or more clients categorized in the identical group respectively.

2. The method according to claim 1, wherein the first usage history information indicates the time-series change in a use amount of the resource.

3. The method according to claim 2, wherein categorization into the identical group is based on a correlation of the time-series changes of the usage history information.

4. The method according to claim 3, wherein the second usage history information is the time-series change of each group into which the clients is categorized based on the correlation for each of the resources.

5. A program which, when executed on a computer, causes the computer to carry out the method according to any one of claims 1 to 4.

6. A device for outputting a usage history of a system that includes resources having a plurality of virtual machines, a plurality of information storage devices, a plurality of networks, and a backup device, and that includes a storage device storing first usage history information indicating usage of the resources for each client, the device comprising:

a reception unit configured to receive a usage combination of the resources that include the plurality of virtual machines, the plurality of information storage devices, the plurality of networks, and the backup device;
an extraction unit configured to specify clients who use the resources of the system in a combination similar to the usage combination within a range of a predetermined threshold, and extract the first usage history information corresponding to each of the clients from the storage device;
a categorization unit configured to categorize one or more clients , among the clients, having similar time-series changes in the first usage history information into an identical group based on a similarity between the time-series changes in the first usage history information of the clients; and
an output unit configured to output, as the usage history, second usage history information indicating a time-series change of the first usage history information of the one or more clients categorized in the identical group respectively.

7. The device according to claim 6, wherein the first usage history information indicates the time-series change in a use amount of the resource.

8. The device according to claim 7, wherein categorization into the identical group is based on a correlation of the time-series changes of the usage history information.

9. The device according to claim 8, wherein the second usage history information is the time-series change of each group into which the clients is categorized based on the correlation for each of the resources.

# FIG. 1

```
┌──────────────┐   SYSTEM CONFIGURATION   ┌──────────────────────┐
│              │ ───────────────────────► │                      │
│     USER     │                          │                      │
│              │ ◄─────────────────────── │                      │
└──────────────┘      USAGE TENDENCY      │                      │
                                          │  INFORMATION         │
┌──────────────┐   CONFIGURATION          │  PROVIDING DEVICE    │
│              │   INFORMATION AND        │                      │
│    CLOUD     │   USAGE INFORMATION       │                     │
│              │ ───────────────────────► │                      │
└──────────────┘                          └──────────────────────┘
```

# FIG. 2

# FIG. 3

INFORMATION PROVIDING DEVICE

SERVER DEVICE 21

COLLECTION UNIT 24

ABSTRACTION UNIT 25

EXTRACTION UNIT 26

CONFIGURATION CLUSTERING UNIT 27

USAGE HISTORY CLUSTERING UNIT 28

GENERATION UNIT 29

STORAGE UNIT 30

SERVICE SET USAGE INFORMATION 41

CONFIGURATION CLUSTER INFORMATION 42

USE AMOUNT CLUSTER INFORMATION 43

PATTERN INFORMATION 44

PRICE INFORMATION 45

RECEPTION UNIT 31

SEARCH UNIT 32

TRANSMISSION UNIT 33

USER TERMINAL 22

23

EP 3 093 760 A1

# FIG. 4

| USER NAME | DATE OF USAGE | SERVICE NAME | USE AMOUNT | CLOUD NAME | |
|---|---|---|---|---|---|
| USER A | 2014/1/1 | SERVICE A | 24 | CLOUD A | |
| USER A | 2014/1/1 | SERVICE B | 48 | CLOUD A | R1 |
| USER A | 2014/1/1 | SERVICE C | 72 | CLOUD A | |
| USER A | 2014/1/2 | SERVICE C | 24 | CLOUD A | |
| USER A | 2014/1/2 | SERVICE B | 24 | CLOUD A | R1 |
| USER A | 2014/1/2 | SERVICE C | 24 | CLOUD A | |
| USER A | 2014/1/3 | SERVICE A | 24 | CLOUD A | |
| USER A | 2014/1/3 | SERVICE D | 48 | CLOUD A | R2 |
| USER A | 2014/1/3 | SERVICE C | 72 | CLOUD A | |
| USER A | 2014/1/4 | SERVICE A | 24 | CLOUD A | |
| USER A | 2014/1/4 | SERVICE B | 72 | CLOUD A | |
| USER A | 2014/1/4 | SERVICE E | 48 | CLOUD A | R3 |
| USER A | 2014/1/4 | SERVICE C | 24 | CLOUD A | |
| USER A | 2014/1/5 | SERVICE A | 24 | CLOUD A | |
| USER A | 2014/1/5 | SERVICE B | 48 | CLOUD A | |
| USER A | 2014/1/5 | SERVICE E | 48 | CLOUD A | R3 |
| USER A | 2014/1/5 | SERVICE C | 48 | CLOUD A | |
| USER A | 2014/1/6 | SERVICE A | 24 | CLOUD A | |
| USER A | 2014/1/6 | SERVICE B | 24 | CLOUD A | |
| USER A | 2014/1/6 | SERVICE E | 72 | CLOUD A | R3 |
| USER A | 2014/1/6 | SERVICE C | 24 | CLOUD A | |

# FIG. 5

| USER NAME | DATE OF USAGE | SERVICE NAME | USE AMOUNT | CLOUD NAME | |
|---|---|---|---|---|---|
| USER A | 2014/1/1 | Virtual Machine | 24 | CLOUD A | R1 |
| USER A | 2014/1/1 | Storage | 48 | CLOUD A | |
| USER A | 2014/1/1 | Network | 72 | CLOUD A | |
| USER A | 2014/1/2 | Virtual Machine | 24 | CLOUD A | R1 |
| USER A | 2014/1/2 | Storage | 24 | CLOUD A | |
| USER A | 2014/1/2 | Network | 24 | CLOUD A | |
| USER A | 2014/1/3 | Virtual Machine | 24 | CLOUD A | R2 |
| USER A | 2014/1/3 | SQL | 48 | CLOUD A | |
| USER A | 2014/1/3 | Network | 72 | CLOUD A | |
| USER A | 2014/1/4 | Virtual Machine | 24 | CLOUD A | R3 |
| USER A | 2014/1/4 | Storage | 72 | CLOUD A | |
| USER A | 2014/1/4 | Backup | 48 | CLOUD A | |
| USER A | 2014/1/4 | Network | 24 | CLOUD A | |
| USER A | 2014/1/5 | Virtual Machine | 24 | CLOUD A | R3 |
| USER A | 2014/1/5 | Storage | 48 | CLOUD A | |
| USER A | 2014/1/5 | Backup | 48 | CLOUD A | |
| USER A | 2014/1/5 | Network | 48 | CLOUD A | |
| USER A | 2014/1/6 | Virtual Machine | 24 | CLOUD A | R3 |
| USER A | 2014/1/6 | Storage | 24 | CLOUD A | |
| USER A | 2014/1/6 | Backup | 72 | CLOUD A | |
| USER A | 2014/1/6 | Network | 24 | CLOUD A | |

# FIG. 6

| CONFIGURATION CLUSTER IDENTIFICATION INFORMATION | USER NAME | CLOUD IDENTIFICATION INFORMATION |
|---|---|---|
| CONFIGURATION CLUSTER A | USER 1 | CLOUD A |
| | USER 4 | |
| | USER 9 | |
| | USER 10 | |
| CONFIGURATION CLUSTER B | USER 2 | |
| | USER 3 | |
| | USER 5 | |
| CONFIGURATION CLUSTER C | USER 6 | |
| | USER 7 | |
| | USER 8 | |

# FIG. 7A

| USER NAME | USER 1 | USER 4 | USER 9 | USER 10 |
|:---:|:---:|:---:|:---:|:---:|
| USER 1 | 1 | 1 | 0.7 | 0.7 |
| USER 4 | 1 | 1 | 0.7 | 0.7 |
| USER 9 | 0.7 | 0.7 | 1 | 1 |
| USER 10 | 0.7 | 0.7 | 1 | 1 |

# FIG. 7B

| USER NAME | USER 1 | USER 4 | USER 9 | USER 10 |
|:---:|:---:|:---:|:---:|:---:|
| USER 1 | 1 | 1 | 1 | 1 |
| USER 4 | 1 | 1 | 1 | 1 |
| USER 9 | 1 | 1 | 1 | 1 |
| USER 10 | 1 | 1 | 1 | 1 |

# FIG. 8

USER SET

CONFIGURATION
CLUSTERING

CONFIGURATION
CLUSTER 3

CONFIGURATION
CLUSTER 2

CONFIGURATION
CLUSTER 1

USE AMOUNT
CLUSTERING

SERVICE
TYPE A

USE
AMOUNT
CLUSTER
A1

USE
AMOUNT
CLUSTER
A2

USE
AMOUNT
CLUSTER
A3

SERVICE
TYPE B

USE
AMOUNT
CLUSTER
B1

SERVICE
TYPE C

USE
AMOUNT
CLUSTER
C1

USE
AMOUNT
CLUSTER
C2

USE
AMOUNT
CLUSTER
C3

# FIG. 9

| USE AMOUNT CLUSTER IDENTIFICATION INFORMATION | USER NAME | SERVICE NAME | CONFIGURATION CLUSTER IDENTIFICATION INFORMATION |
|---|---|---|---|
| USE AMOUNT CLUSTER A1 | USER 1 | Virtual Machine | CONFIGURATION CLUSTER A |
| USE AMOUNT CLUSTER A1 | USER 4 | Virtual Machine | CONFIGURATION CLUSTER A |
| USE AMOUNT CLUSTER A2 | USER 9 | Virtual Machine | CONFIGURATION CLUSTER A |
| USE AMOUNT CLUSTER A2 | USER 10 | Virtual Machine | CONFIGURATION CLUSTER A |
| USE AMOUNT CLUSTER B1 | USER 1 | Storage | CONFIGURATION CLUSTER A |
| USE AMOUNT CLUSTER B1 | USER 4 | Storage | CONFIGURATION CLUSTER A |
| USE AMOUNT CLUSTER B1 | USER 9 | Storage | CONFIGURATION CLUSTER A |
| USE AMOUNT CLUSTER B1 | USER 10 | Storage | CONFIGURATION CLUSTER A |
| ⋮ | ⋮ | ⋮ | CONFIGURATION CLUSTER A |
| ⋮ | ⋮ | ⋮ | CONFIGURATION CLUSTER B |
| ⋮ | ⋮ | ⋮ | ⋮ |

# FIG. 10

| SERVICE TYPE | CLOUD IDENTIFICATION INFORMATION | PRICE [$/UNIT USE AMOUNT] |
|---|---|---|
| Virtual Machine | CLOUD A | 0.05 |
| Storage | CLOUD A | 0.01 |
| Network | CLOUD A | 0.02 |
| Backup | CLOUD A | 0.015 |
| SQL | CLOUD A | 0.001 |
| Virtual Machine | CLOUD B | 0.08 |
| Storage | CLOUD B | 0.02 |
| Network | CLOUD B | 0.025 |
| Backup | CLOUD B | 0.01 |
| SQL | CLOUD B | 0.002 |
| ⋮ | ⋮ | ⋮ |

# FIG. 11

| USE AMOUNT CLUSTER IDENTIFICATION INFORMATION | TIME | PRICE |
|---|---|---|
| USE AMOUNT CLUSTER A1 | 1 | 0.01 |
| | 2 | 0.025 |
| | 3 | 0.02 |
| | 4 | 0.01 |
| | 5 | 0.01 |
| | 6 | 0.04 |
| | 7 | 0.05 |
| | 8 | 0.01 |
| USE AMOUNT CLUSTER A2 | 1 | 0.07 |
| | 2 | 0.05 |
| | 3 | 0.06 |
| | 4 | 0.05 |
| | 5 | 0.04 |
| | 6 | 0.01 |
| | 7 | 0.01 |
| | 8 | 0.01 |
| · · · | · · · | · · · |

# FIG. 12

S1: SPECIFY CONFIGURATION CLUSTER

( CONFIGURATION CLUSTER 3 )  ( CONFIGURATION CLUSTER 2 )  ( CONFIGURATION CLUSTER 1 )

SERVICE TYPE A
( USE AMOUNT CLUSTER A1 )  ( USE AMOUNT CLUSTER A2 )  ( USE AMOUNT CLUSTER A3 )

SERVICE TYPE B
( USE AMOUNT CLUSTER B1 )

SERVICE TYPE C
( USE AMOUNT CLUSTER C1 )  ( USE AMOUNT CLUSTER C2 )  ( USE AMOUNT CLUSTER C3 )

S2: SPECIFY USE AMOUNT CLUSTER FOR EACH SERVICE

S3: CONVERT OUTPUT FORMAT

PRICE
A2(30%)
A1 (50%)
OUTPUT
A3(20%)
(A)  TIME

PRICE
B1(100%)
OUTPUT
(B)  TIME

PRICE
C2(25%)
C1(25%)
OUTPUT
C3(50%)
(C)  TIME

EP 3 093 760 A1

# FIG. 13

S1: SPECIFY CONFIGURATION CLUSTER

CONFIGURATION CLUSTER 3

CONFIGURATION CLUSTER 2

CONFIGURATION CLUSTER 1

S2-A:SPECIFY SERVICE TYPE HAVING LARGEST INFLUENCE ON PRICE

SERVICE A

USE AMOUNT CLUSTER A1

USE AMOUNT CLUSTER A2

USE AMOUNT CLUSTER A3

S3-A: CONVERT OUTPUT FORMAT

SERVICE B

USE AMOUNT CLUSTER B1

S2: SPECIFY USE AMOUNT CLUSTER FOR EACH SERVICE

S3-B: ADD AVERAGE

SERVICE C

USE AMOUNT CLUSTER C1

USE AMOUNT CLUSTER C2

USE AMOUNT CLUSTER C3

PRICE

A2'(30%)
$(A2+B1+(c1+c2+c3)/3)$

A1'(50%)
$(A1+B1+(c1+c2+c3)/3)$

A3'(20%)
$(A3+B1+(c1+c2+c3)/3)$

TIME

(A')

EP 3 093 760 A1

# FIG. 14

START

↓

COLLECT SERVICE SET USAGE INFORMATION AND PRICE INFORMATION — S101

↓

PERFORM ABSTRACTION — S102

↓

EXTRACT MODAL CONFIGURATION — S103

↓

PERFORM CONFIGURATION CLUSTERING — S104

↓

PERFORM USAGE HISTORY CLUSTERING — S105

↓

GENERATE PATTERN — S106

↓

END

# FIG. 15

```
                    ┌──────────┐
                    │  START   │
                    └──────────┘
                         │
                         ▼
         ┌─────────────────────────────────┐
         │   CALCULATE CONFIGURATION        │  S201
         │   DISTANCE AND DIFFERENCE        │
         │ BETWEEN EVERY PAIR OF ALL USERS  │
         └─────────────────────────────────┘
                         │
                         ▼
         ┌─────────────────────────────────┐
         │         SET THRESHOLDS           │  S202
         └─────────────────────────────────┘
                         │
                         ▼
         ┌─────────────────────────────────┐
         │  CLUSTER PAIR WITH Dist ≤ i AND  │  S203
         │  Diff ≤ THD_diff INTO SINGLE     │
         │      CONFIGURATION CLUSTER       │
         └─────────────────────────────────┘
                         │
                         ▼
         ┌─────────────────────────────────┐
         │   SET CLUSTERED PAIR AS ONE USER │  S204
         └─────────────────────────────────┘
                         │
                         ▼          S205
              ◇ DOES NEWLY CLUSTERED ◇ ─── YES ──►
              ◇    PAIR EXIST?       ◇
                         │ NO
                         ▼
         ┌─────────────────────────────────┐
         │           i = i + Δ              │  S206
         └─────────────────────────────────┘
                         │
                         ▼          S207
              ◇    i < THD_dist     ◇ ─── YES ──►
                         │ NO
                         ▼
         ┌─────────────────────────────────┐
         │ CLUSTER UN-CLUSTERED USER INTO   │  S208
         │   INDEPENDENT USER CLUSTER       │
         └─────────────────────────────────┘
                         │
                         ▼
                    ┌──────────┐
                    │   END    │
                    └──────────┘
```

Steps as labelled:

- S203: CLUSTER PAIR WITH $Dist \leq i$ AND $Diff \leq THD_{diff}$ INTO SINGLE CONFIGURATION CLUSTER
- S206: $i = i + \Delta$
- S207: $i < THD_{dist}$

# FIG. 16

START

CALCULATE CORRELATION OF USAGE OF EACH SERVICE BETWEEN USERS IN EACH CONFIGURATION CLUSTER — S301

CALCULATE CORRELATION DISTANCE BETWEEN USERS INCLUDED IN EACH CONFIGURATION CLUSTER — S302

SET THRESHOLD — S303

CLUSTER PAIR WITH Dist ≦ i INTO ONE CONFIGURATION CLUSTER — S304

SET CLUSTERED PAIR AS ONE USER — S305

DOES NEWLY CLUSTERED PAIR EXIST? — S306
YES
NO

$i = i + \Delta$ — S307

$i < THD_{dist}$ — S308
YES
NO

CLUSTER UN-CLUSTERED USER INTO INDEPENDENT USER CLUSTER — S309

END

# FIG. 17

START

↓

RECEIVE REQUESTED
CONFIGURATION INFORMATION ⟋ S401

↓

SPECIFY CONFIGURATION CLUSTER ⟋ S402

↓

SPECIFY USE AMOUNT CLUSTER ⟋ S403

↓

ACQUIRE PATTERN FOR USE AMOUNT
CLUSTER ⟋ S404

↓

CONVERT OUTPUT FORMAT ⟋ S405

↓

TRANSMIT TO USER TERMINAL ⟋ S406

↓

END

# FIG. 18

# FIG. 19

| USER NAME | USER 1 | USER 4 | USER 9 | USER 10 |
|:---:|:---:|:---:|:---:|:---:|
| USER 1 | 1 | 1 | 0.85 | 0.85 |
| USER 4 | 1 | 1 | 0.85 | 0.85 |
| USER 9 | 0.85 | 0.85 | 1 | 1 |
| USER 10 | 0.85 | 0.85 | 1 | 1 |

FIG. 20

# FIG. 21

START

COLLECT SERVICE SET USAGE INFORMATION AND PRICE INFORMATION — S501

RECEIVE REQUESTED CONFIGURATION INFORMATION FROM USER TERMINAL — S502

PERFORM ABSTRACTION — S503

EXTRACT MODAL CONFIGURATION — S504

PERFORM CONFIGURATION CLUSTERING — S505

PERFORM USAGE HISTORY CLUSTERING — S506

GENERATE PATTERN — S507

CONVERT OUTPUT FORMAT AND OUTPUT — S508

END

Europäisches
Patentamt

European
Patent Office

Office européen
des brevets

# EUROPEAN SEARCH REPORT

Application Number

EP 16 16 5525

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JENNIE DUGGAN ET AL: "Packing light: Portable workload performance prediction for the cloud", DATA ENGINEERING WORKSHOPS (ICDEW), 2013 IEEE 29TH INTERNATIONAL CONFERENCE ON, IEEE, 8 April 2013 (2013-04-08), pages 258-265, XP032431619, DOI: 10.1109/ICDEW.2013.6547460 ISBN: 978-1-4673-5303-8 * the whole document * | 1-9 | INV. G06F9/50 |
| X | CARON E ET AL: "Forecasting for Grid and Cloud Computing On-Demand Resources Based on Pattern Matching", CLOUD COMPUTING TECHNOLOGY AND SCIENCE (CLOUDCOM), 2010 IEEE SECOND INTERNATIONAL CONFERENCE ON, IEEE, 30 November 2010 (2010-11-30), pages 456-463, XP032393342, DOI: 10.1109/CLOUDCOM.2010.65 ISBN: 978-1-4244-9405-7 * page 456 - page 458 * | 1-9 | |
| X | JIANG YEXI ET AL: "Cloud Analytics for Capacity Planning and Instant VM Provisioning", IEEE TRANSACTIONS ON NETWORK AND SERVICE MANAGEMENT, IEEE, US, vol. 10, no. 3, 1 September 2013 (2013-09-01), pages 312-325, XP011526916, ISSN: 1932-4537, DOI: 10.1109/TNSM.2013.051913.120278 [retrieved on 2013-09-13] * page 1 - page 3 * | 1-9 | |

TECHNICAL FIELDS
SEARCHED (IPC)

G06F

-/--

The present search report has been drawn up for all claims

| Place of search | Date of completion of the search | Examiner |
|---|---|---|
| The Hague | 5 October 2016 | Dewyn, Torkild |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 16 16 5525

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EDDY CARON ET AL: "Pattern Matching Based Forecast of Non-periodic Repetitive Behavior for Cloud Clients", JOURNAL OF GRID COMPUTING, KLUWER ACADEMIC PUBLISHERS, DO, vol. 9, no. 1, 6 January 2011 (2011-01-06), pages 49-64, XP019889159, ISSN: 1572-9184, DOI: 10.1007/S10723-010-9178-4 * the whole document * | 1-9 | |
| A | US 2013/179381 A1 (KAWABATA TAKAYUKI [JP] ET AL) 11 July 2013 (2013-07-11) * the whole document * | 1-9 | |
| A | YE XU ET AL: "Preference, context and communities", PROCEEDINGS OF THE 17TH ANNUAL INTERNATIONAL SYMPOSIUM ON INTERNATIONAL SYMPOSIUM ON WEARABLE COMPUTERS, ISWC '13, 1 January 2013 (2013-01-01), page 69, XP055164842, New York, New York, USA DOI: 10.1145/2493988.2494333 ISBN: 978-1-45-032127-3 * the whole document * | 1-9 | |

TECHNICAL FIELDS
SEARCHED (IPC)

The present search report has been drawn up for all claims

| Place of search | Date of completion of the search | Examiner |
|---|---|---|
| The Hague | 5 October 2016 | Dewyn, Torkild |

EPO FORM 1503 03.82 (P04C01)

## ANNEX TO THE EUROPEAN SEARCH REPORT
## ON EUROPEAN PATENT APPLICATION NO.

EP 16 16 5525

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2016

| Patent document cited in search report | Publication date | Patent family member(s) | Publication date |
|---|---|---|---|
| US 2013179381 A1 | 11-07-2013 | JP 2013143039 A<br>US 2013179381 A1 | 22-07-2013<br>11-07-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013143039 A
- JP 2014029587 A
- WO 2012086444 A